Europäisches Patentamt

European Patent Office

Office européen des brevets

(11) Publication number: **0 269 547**
A2

(12) **EUROPEAN PATENT APPLICATION**

(21) Application number: **87630218.3**

(22) Date of filing: **29.10.87**

(51) Int. Cl.⁴: **B 62 L 1/00**
B 62 L 3/02, B 60 T 13/02

(30) Priority: **05.11.86 IL 80518   30.12.86 IL 81122**
**01.06.87 IL 82728**

(43) Date of publication of application:
**01.06.88   Bulletin   88/22**

(84) Designated Contracting States:
**AT BE CH DE ES FR GB GR IT LI LU NL SE**

(71) Applicant: **Rogozinski, Joseph**
**14 Motza Street**
**IL-52366 Ramat Gan  (IL)**

(72) Inventor: **Rogozinski, Joseph**
**14 Motza Street**
**IL-52366 Ramat Gan  (IL)**

(74) Representative: **Weydert, Robert et al**
**OFFICE DENNEMEYER S.à.r.l. P.O. Box 1502**
**L-1015 Luxembourg  (LU)**

(54) **Braking system.**

㊼ A power braking system for a vehicle (10) including apparatus (30) for deriving kinetic energy from a road wheel (18) of a vehicle (10) or from a component fixedly coupled thereto for rotation therewith and apparatus (32) for selectably applying at least a portion of the energy derived from the at least one road wheel (18) of a vehicle (10) to braking apparatus (26).

FIG. 1

EP 0 269 547 A2

**Description**

BRAKING SYSTEM

FIELD OF THE INVENTION

The present invention relates to braking systems, generally and particularly to powered braking systems finding application in two-wheeled vehicles, such as rider powered vehicles.

BACKGROUND OF THE INVENTION

Various types of power-assisted braking systems are known. These include vacuum operated brakes which draw a vacuum from a vehicle engine, as well as exhaust brakes and retarders, which slow a vehicle by slowing the vehicle's engine. There are also known regenerative braking systems which store the vehicle's kinetic energy and then use this kinetic energy for subsequent acceleration of the vehicle.

As known, conventional bicycle handbrakes are operated by a handle mounted on the handle-bar of the bicycle coupled to a prong-type traction cable arrangement ("Bowden cable") for operating -- i.e. displacing one against the other -- rubber friction blocks mounted on the prings. The prongs are closed in a jaw-like manner, clamping therebetween the metal rim of the respective road-wheel with which the brake-system is associated.

This purely mechanical operation of bicycle brake-systems, suffers the disadvantage in that a considerable amount of force is required for braking. Small children rarely have the power in their hands to effectively operate the brakes; in emergency situations, even grown-ups may fail to exert the requisite force to achieve effective braking.

Furthermore, it frequently occurs that the system becomes out of adjustment, in the sense that the fraction blocks do not properly reach for engagement in spite of the handle having been pulled all the way down to the maximum braking stroke.

Hydraulically powered bicycle brakes are commercially available from Gustav Magenwirth GmbH & Co. of Bad Urach, West Germany. These brakes are operated directly by hand pressure applied by the rider to a brake handle which includes a piston. The piston provides hydraulic fluid pressure to a disk brake which engages the wheel.

SUMMARY OF THE INVENTION

It is thus the general object of the present invention to provide an improved braking system for vehicles which is also suitable for use on bicycles and other rider-powered vehicles.

There is thus provided in accordance with a preferred embodiment of the invention a power braking system for a vehicle comprising apparatus for deriving kinetic energy from at least one road wheel of a vehicle or from a component fixedly coupled thereto for rotation therewith and apparatus for selectably applying at least a portion of the energy derived from the at least one road wheel of a vehicle to braking apparatus.

Additionally in accordance with a preferred embodiment of the invention, the apparatus for deriving kinetic energy comprises rotatable means which selectably engages a road wheel of the vehicle.

Further in accordance with an embodiment of the invention, the apparatus for selectably applying comprises mechanical means for applying force to braking apparatus.

Additionally in accordance with a preferred embodiment of the invnetion, the apparatus for selectably applying comprises electro-mechanical means for applying force to braking apparatus.

Further in accordance with a preferred embodiment of the invention, the apparatus for selectably applying comprises hydraulic means for applying force to braking apparatus.

Additionally in accordance with a preferred embodiment of the invention there is also provided operator control apparatus for controlling the operation of one or both of the apparatus for selectably applying and the apparatus for deriving.

Further in accorance with an embodiment of the invention there is also provided apparatus for sensing and preventing overturning of a vehicle due to excessive braking.

Additionally in accordance with a preferred embodiment of the invention, the apparatus for deriving comprises a friction engagement wheel and means for selectably bringing the friction engagement wheel into energy deriving frictional engagement with a road wheel.

Further in accordance with a preferred embodiment of the invention, the apparatus for selectably bringing comprises apparatus for increasing the fractional engagement of the friction engagement wheel with the road wheel as a positive function of the energy applied to the braking appartus by the apparatus for selectably applying.

It is a further object of the invention that the effective braking shall be in proportion to the amount of force applied to the handle.

According to an aspect of the invention, there is provided a brakes system, particularly for non-automotive vehicles, including prong-type, traction cable-operated brake jaws associated with at least one road wheel of the vehicle, characterized by a hydraulic rotational pump, a friction wheel for driving the pump upon engagement with and rotation by a road wheel of a vehicle, a cylinder and piston device connected to the pump, a valve for controlling the supply of pressurized hydraulic fluid from the pump to the cylinder and piston device, means for coupling the cable to the cylinder and piston device, manually operated means for selectively activating the valve whereby a linear movement produced by the device effects the application of the brake jaws to brake the rotation of the respective road-wheel.

Preferably, the friction-wheel is adapted to be engaged with the road-wheel only upon starting of and during the braking action.

Furthermore, the engaging of the friction-wheel as well as control over the amount of braking power is attained concurrently by applying one and the same brake-handle.

Additionally in accordance with the invention there is provided a brakes system, particularly for non-automotive vehicles, including a prong-type, traction cable-operated brake jaws associated with at least one road wheel of the vehicle, a friction clutch device comprising a first, rotationally power-driven member, selectively engageable to the first member for driving the second member by friction between the members, a friction-wheel for driving the first member upon engagement with and rotation by a road-wheel of the vehicle means for adjustably displacing the members relatively with respect to each other towards and way from their frictionally-engaged position, and traction means coupled to the second member and to the said cable for effecting the application of the brake jaws to brake the rotation of the respective road-wheel.

Preferably, the friction-wheel is adapted to be engaged with the road-wheel only upon starting of, and during the braking action.

Furthermore, the engagement of the friction-wheel as wheel as control over the amount of braking power is attained concurrently by applying one and the same brake-handle.

## BRIEF DESCRIPTION OF THE DRAWINGS

These and further objectives, advantages, and constructional features of the invention will be more fully understood in the light of the ensuing description of a preferred embodiment of the invention, given by way of example only, with reference to the accompanying drawings, wherein --

Fig. 1 is a general, schematic view of a bicycle equipped with a hydraulic power-brake system according to the invention;

Fig. 2 is a schematic illustration of the major components of the power-brake system of Fig. 1;

Fig. 3 is a cross-section of an hydraulic pump assembly employed in the embodiment of Figs. 1 and 2;

Fig. 4 is a sectional illustration taken along line IV--IV of Fig. 3;

Fig. 5 is a general, schematic view of a bicycle equipped with a mechanical power-brake system according to an alternative embodiment of the invention;

Fig. 6 is a schematic illustration of the major components of the power-brake system of Fig. 5;

Fig. 7 is a cross-section of the friction clutch and gear transmission housing employed in the embodiment of Fig. 6.;

Fig. 8 is a sectional illustration taken along line VIII -VIII of Fig. 7;

Fig. 9 is a sectional illustration taken along line IX - IX of Fig. 7;

Fig. 10 is a general, schematic view of a bicycle equipped with a hydraulic power-brake system according to an alternative embodiment of the invention;

Fig. 11 is a schematic illustration of the major components of the power-brake system of Fig. 10;

Fig. 12 is a partial cross-section of a hydraulic pump assembly employed in the embodiment of Figs. 10 and 11;

Fig. 13 is a partially cut-away sectional illustration taken along line XIII - XIII of Fig. 12;

Fig. 14 is a sectional illustration taken along the line XIV - XIV of Fig. 13;

Figs. 15A, 15B, 15C and 15D are timing diagrams illustrating operation of apparatus for preventing overturning provided in accordance with a preferred embodiment of the invention;

Fig. 16 is a general, schematic view of a bicycle equipped with a hydraulic power-brake system according to a further alternative embodiment of the invention;

Fig. 17 is a schematic illustration of the major components of the power-brake system of Fig. 16;

Fig. 18 is a schematic illustration of the major components of a power-brake system alternative to that of Fig. 17;

Fig. 19 is a general, schematic view of a bicycle equipped with a mechanical power-brake system according to a further alternative embodiment of the invention;

Fig. 20 is a schematic illustration of the major components of the power-brake system of Fig. 19;

Fig. 21 is a detailed illustration of a clutch and gear transmission unit employed in the apparatus of Figs. 19 and 20;

Fig. 22 is a sectional illustration taken along the lines XXII - XXII in Fig. 21 when the clutch is disengaged;

Fig. 23 is an illustration corresponding to part of Fig. 22 and showing the clutch in an engaged orientation;

Fig. 24 is a sectional illustration taken along the lines XXIV - XXIV of Fig. 22;

Fig. 25 is a general, schematic view of a bicycle equipped with an electro-mechanical power-brake system according to a further alternative embodiment of the invention;

Fig. 26 is a schematic illustration of the major components of the power-brake system of Fig. 25;

Fig. 27 is a detailed illustration or a electro-mechanical transmission unit employed in the apparatus of Figs. 25 and 26;

Fig. 28 is a partially block diagram sectional illustration taken along the lines XXVIII - XXVIII in Fig. 27;

Fig. 29 is a sectional illustration taken along the lines XXIX - XXIX of Fig. 28;

Fig. 30 is a block diagram illustration of a DC gear motor and associated closed loop moment of rotation control circuit useful in the apparatus of Figs. 25- 29.

## DETAILED DESCRIPTION OF PREFERRED EMBODIMENTS

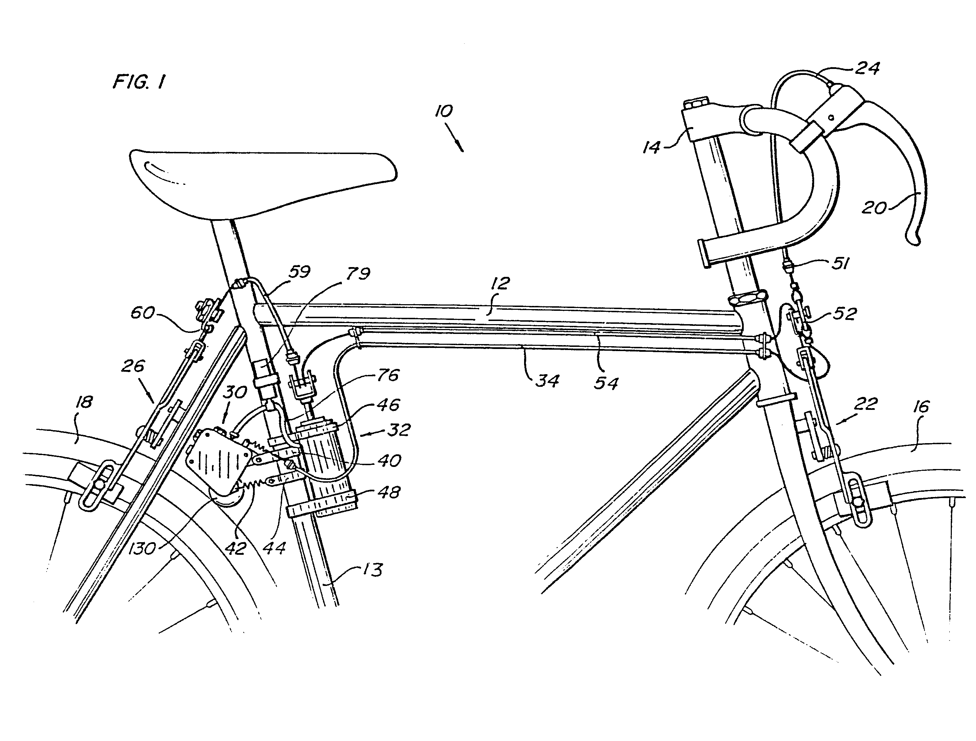

Reference is now made to Figs. 1 - 4. A bicycle denoted 10 in Fig. 1 generally comprises a frame 12, a handle bar 14, a front road-wheel 16, and a rear road-wheel 18. A brake-handle 20 is mounted on the handle-bar 14, and coupled to a front wheel conventional prong-type braking mechanism 22 as by a Bowden cable 24. A similar cable-operated braking mechanism 26 is provided for the rear wheel 18.

In accordance with an embodiment of the present invention there is provided an auxiliary hydraulic-booster brake-operating system which comprises a hydraulic pump assembly 30, a hydraulic cylinder and piston device 32 and a traction cable 34, operatively coupled between the pump assembly 30 and the brake handle 20.

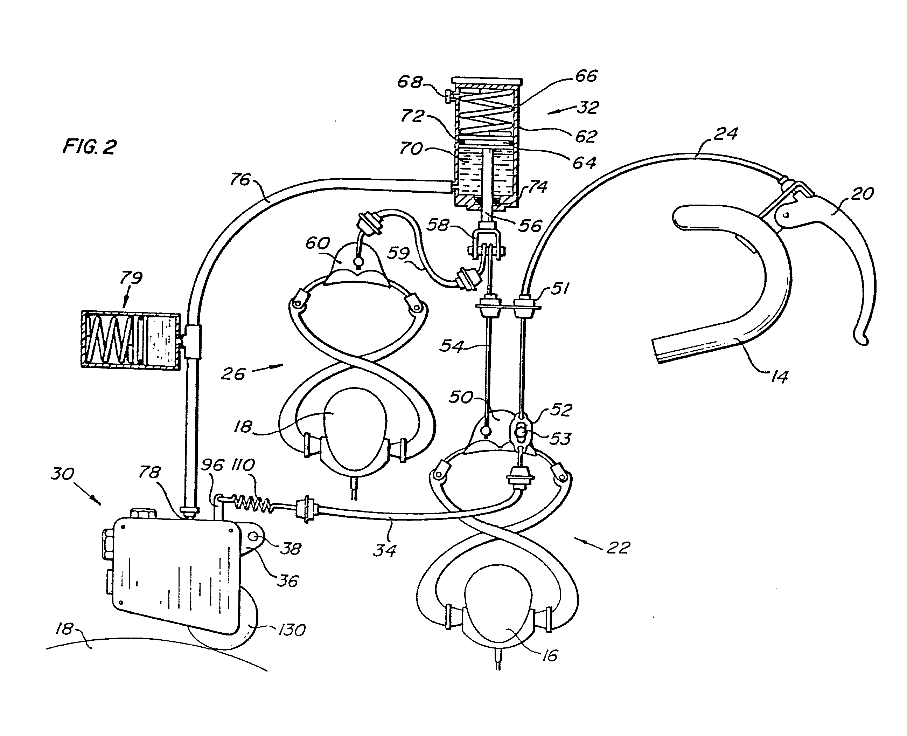

The pump assembly 30 is pivotably mounted onto a frame-member 13 for selectable pivotal motion with respect thereto, by a mounting portion 36 (Fig. 2), a pivot pin 38 which defines the axis of pivotable motion, and a clamp 40 (Fig. 1) which engages frame-member 13. A coil spring 42, having one end attached to the pump assembly 30 and an opposite end mounted at one end thereof onto the frame-member 13 by a clamp 44, urges the frame-member 13 in a counter-clockwise direction with respect to pivot pin 38 as seen in Fig. 1, and thus away from engagement with the rear road wheel 18. Hydraulic cylinder and piston device 32 is mounted onto the frame-member 13 by means of clamps 46 and 48.

Referring now to Fig. 2, it is seen that the front wheel braking mechanism 22 is conventionally operated by the brake-handle 20, which is coupled by the cable 24 to a displaceable traction plate 50 via a standard cable nipple 51. (Such nipples are installed wherever required and will not be specifically denoted.)

The traction plate 50 operates the front wheel braking mechanism 22 is a conventional manner, except that (for a reason to be explained below) the cable 24 connection thereto is made with a certain degree of play, as may be provided by a slotted line 52 and coupling stud pin 53.

The same slotted link 52 (rather than the plate 50) is coupled to the pump assembly 30 by the cable 34.

Traction plate 50 is coupled (independently of its connection to cable 24 as described above) to a piston rod 56 of cylinder and piston device 32 by means of a cable 54. Cable 54 is affixed at one end thereof to the plate 50 and, at its other end, via a shackle 58, to piston rod 56. Likewise, a cable 59 couples the rear wheel brake mechanism 26 via a reaction plate 60 to the shackle 58 of the piston rod 56.

Cylinder and piston device 32 comprises a cylinder 62, a piston 64, and a compression spring 66. The cylinder compartment defined above the piston 64 is vented to the atmosphere via orifice 68. A pressure compartment 70 defined within cylinder 62, is sealed by gaskets 72 and 74 and is connected by a hydraulic fluid conduit 76 to a supply outlet 78 of the pump assembly 30. Preferably, a hydraulic accumulator device 79 is provided in communication with the hydraulic fluid conduit 76, as schematically shown. Accumulator 79 is operative to smooth out pressure pulses and differences so as to provide relatively smooth braking and is further operative as a braking energy storage buffer.

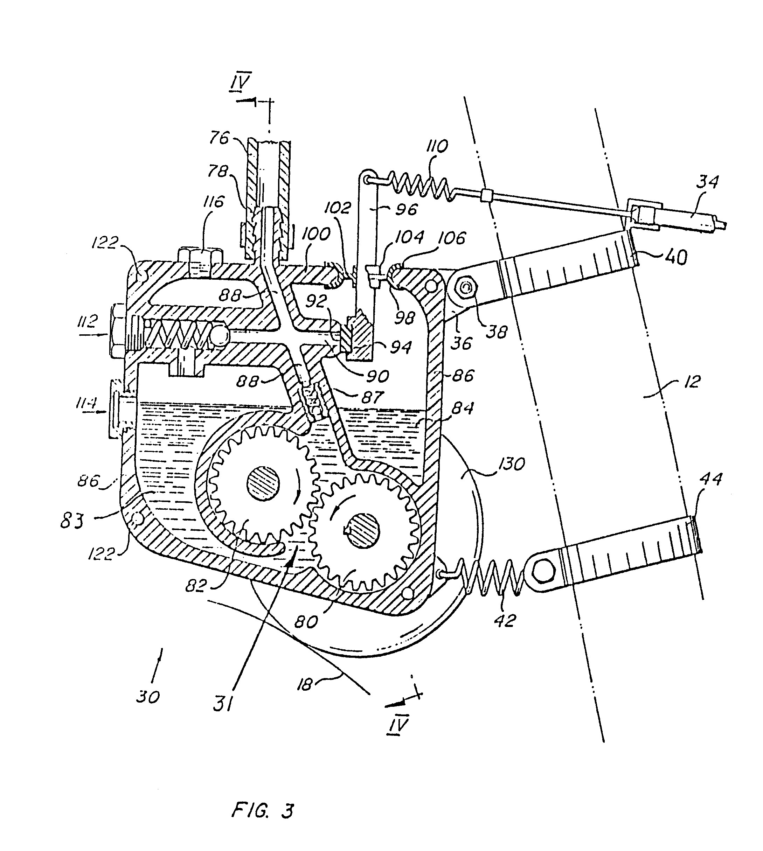

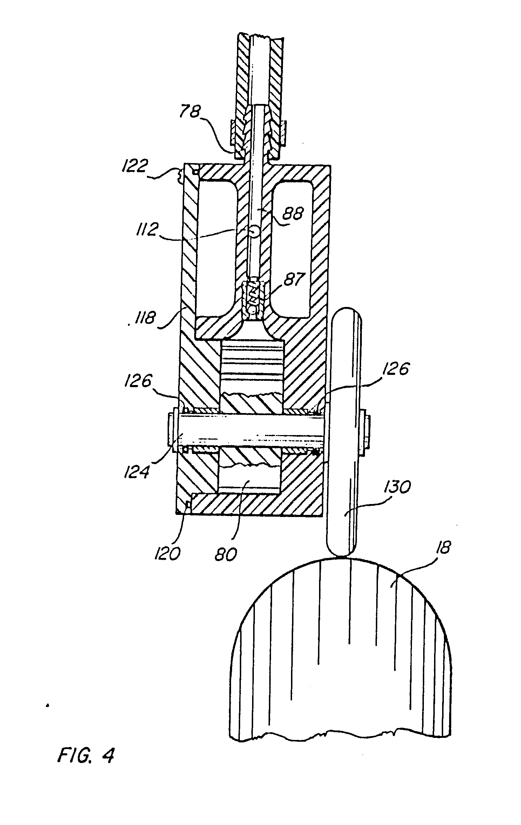

Reference is now made to Figs. 3 and 4, which illustrate in detail the structure of the pump assembly 30. Pump assembly 30 comprises a rotational pump, indicated generally by reference numeral 31, comprising interdigitated gear-wheels 80 and 82 adapted to supply, under pressure, hydraulic fluid 84 from a lower portion or reservoir 83 of pump-housing 86, through a check valve 87 into a supply outlet passage 88 leading to supply outlet 78.

A passage 90 branches off passage 88 and has an outlet port 92. Outlet port 92 is adapted to be closed by a plug member 94 made of rubber, leather, or any other suitable material, which is disposed at one end of a pivotable rod 96. The rod 96 extends through an opening 98 formed in an upper wall portion 100 of the pump housing 86. The mounting of the rod is preferably made by an elastic joint member 102 which comprises a central reinforced sleeve 104 and a circumferential lip 106 by which the joint is attached inside the opening 98. The rod 96 is connected at its end which projects outside the pump-housing 86, to the cable 34 via a tension coil-spring 110.

The pump assembly 30 also typically includes a pressure overload relief ball valve 112 of any suitable conventional design, a transparent hydraulic fluid level guage 114, and a hydraulic fluid filling and vent plug 116.

Pump housing 86 is closeable by a cover 118 (Fig.4), provided with a seal 120 and screws 122.

Gear wheel 80 is drivingly coupled via its axle 124, which is sealed by gaskets 126, to a friction wheel 130 which constitutes the power generator of the pump when the friction wheel is frictionally engaged with the rear road wheel 18. This engagement will now be described.

It will be recalled that the pump assembly 30 is pivotally mounted about an axis defined by pivot pin 38 and is normally urged by spring 42 out of engagement with the rear road wheel 18, such that the friction-wheel 130 is distanced from the tire of the rear road-wheel 18. Thus, the fact that the power-brake system of the present invention is associated with a bicycle does not interfere with the normal riding of the bicycle.

When the rider wants to brake and presses the brake handle 20, the following operations will occur: First, cable 24 actuates link 52, which in turn pulls cable 34. Cable 34, via spring 110, pulls on rod 96, which causes the pivoting of the entire pump assembly 30 and brings the friction wheel 130 into operative contact with the rear road-wheel 18.

As a result of the clockwise-directed force (in the sense of Fig. 3) applied to the upper end of the rod 96, plug member 94 firmly closes over the outlet port 92 of the passage 90. The pump 31, driven by rotation of the friction wheel 130, forces the hydraulic fluid under pressure to pressure compartment 70 of the cylinder and piston device 32.

Piston 64 is inwardly displaced and pulls the rear wheel brake mechanism 26 via cable 59 and plate 60. Simultaneously, cable 54 is pulled by the displacement of piston 64 and operates the front wheel braking mechanism 22, via the traction plate 50.

For as long as the hydraulically operated system remains activated, no mechanical connection is established between the cable 24 and the traction plate 50 due to the slotted link 52; if, however the power system fails for any reason, the situation changes in the sense that a relative movement of the traction plate 50 with respect to the link 52 will eventually cause the engagement and traction of the plate by cable 24, in substantially the conventional mode of operation.

The effective amount of hydraulic pressure available for the braking operation is adjusted and controlled by the amount of force applied to the plug member 94, the arrangement being such that hydraulic fluid can by-pass the pressurized working line of the system -- passage 88, hydraulic fluid conduit 76, and cylinder 32 -- and become drained for re-circulation through the outlet port 92 back to the fluid reservoir 84. In other words, the more firmly is the plug member 94 closed against the outlet port 92 -- the higher becomes the useful pressure conveyed by the hydraulic pump assembly 30 to the cylinder 32.

When a braking operation is completed and no further operation of rotational pump 31 is produced, check valve 87 is operative to prevent the breakdown of the pressure in pressure compartment 70 and accumulator 79 and thus, so long as brake-handle 20 has not been released, power braking is maintained.

When the brake-handle 20 is released, the pump-housing 86 is allowed to resume its inoperative position wherein the friction wheel 130 is disengaged from the road-wheel 18.

As a further alternative embodiment, braking mechanism 22 may be associated with the rear wheel while braking mechanism 26 is associated with the front wheel.

Alternatively, the hydraulic-booster brake system can be associated with only one of the vehicle wheel-braking mechanisms, or alternatively, individual pump-units be installed for each one of the wheels.

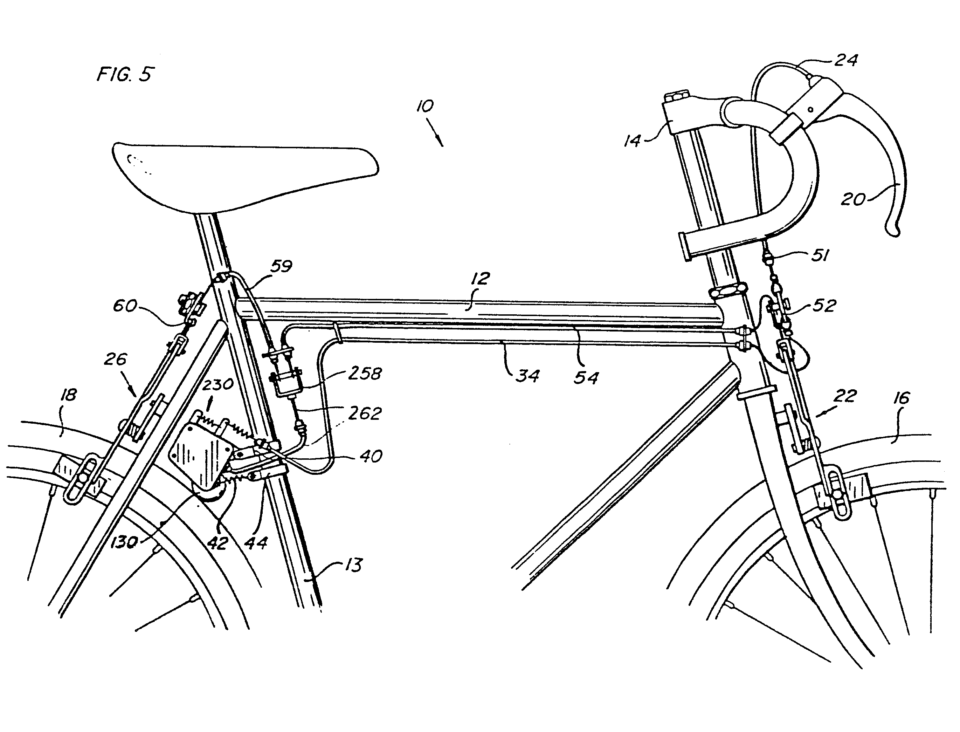

According to an alternative embodiment of the present invention, a mechanical embodiment of the powered braking system may be provided, as illustrated in Figs. 5 - 9. For the sake of conciseness and clarity, those elements in the embodiment of Figs. 5 - 9 which are identical to corresponding elements described hereinabove in connection with Figs. 1 - 4 are referred to in Figs. 5 - 9 by identical reference numbers and are not described here once again.

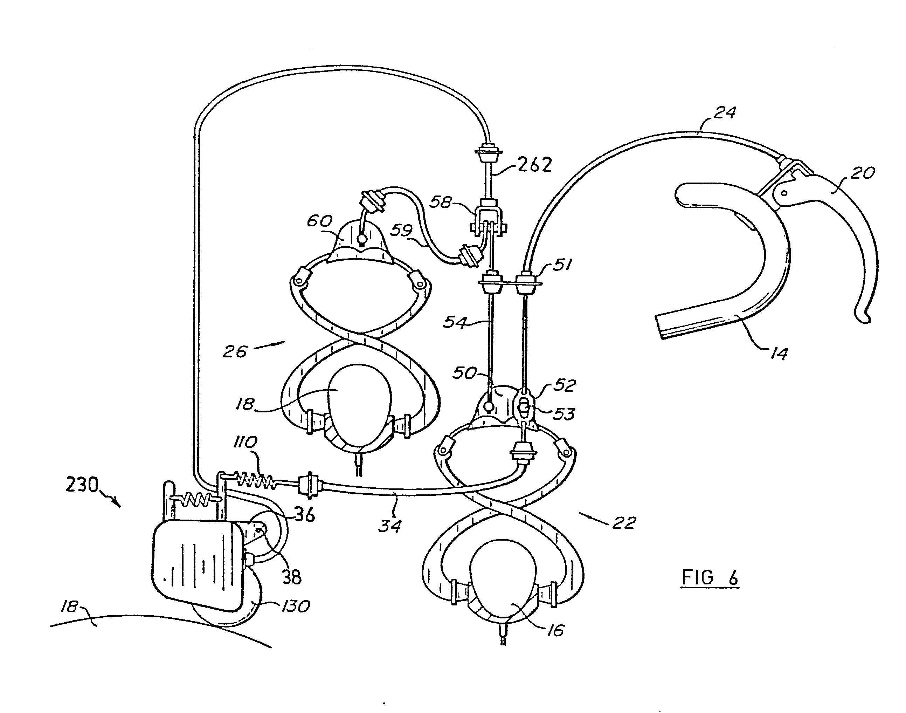

According to the present invention there is provided an auxilliary, friction clutch driven brake-operating system which comprises a clutch and gear transmission unit 230 and a traction cable 34, operatively coupled between the unit 230 and the brake handle 20. The unit 230 is mounted on frame-member 13 by a mounting portion 36 (Fig. 6), pivot pin 38, and clamp 40, and is attracted in the direction of the frame-member 13 by coil spring 42, attached to the frame-member 13 by clamp 44.

In more detail, as better seen in Fig. 6, it is seen that link 52 is coupled to unit 230 by cable 34. The shackle 58 constitutes the auxilliary operator member which relays the braking action, provided by unit 230, to both the front and the rear braking mechanisms 22 and 26. Thus, shackle 58 is operatively connected to the unit 230 by a traction cable 262.

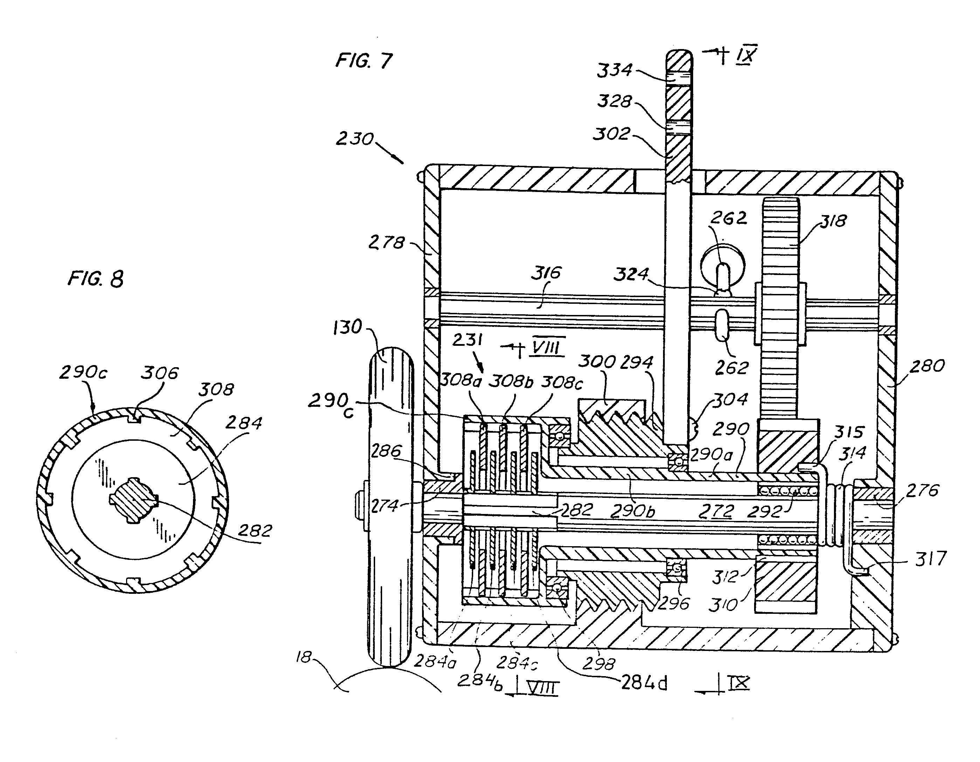

The construction of the mechanical prime mover, in the form of clutch and gear transmission unit 230 and the clutch unit thereof 231 will now be described with reference to Figs. 7 - 9.

A friction-wheel 130 is keyed, or otherwise fixed to an axle 272 which is rotatably mounted by suitable bearings 274 and 276 between side walls 278 and 280 of unit 230. As will be described below, the friction-wheel 130 is adapted to become engaged and disengaged by a tilting movement of the unit 230 as a whole, through application of the brake handle 20.

The axle 272 has a splined section 282 slidingly -- but not rotatably -- supporting a series of friction clutch or coupling disks 284a, 284b, 284c and 284d. The disk 284a, at the extreme left-hand side of the splined section 282, is blocked against further sidewise sliding thereof by a shoulder (or any equivalent blocking member) 286.

Further mounted on the axle 272 is a sleeve 290. It comprises a first section 290a directly rotatable about the axle 272 by a ball (Torrington (TM)) bearing 292. The second section 290b is surrounded by a large pitch, or coarse screw-threaded member 294, in the following manner. Ball-bearings 296 and 298 allow the rotation of the member 294. However, there is provided a screw-threaded ring 300 which is fixed relative to the unit 230, and preferably integrally formed therewith, and threadably coupled to member 294. A shift handle 302 is fixed, as by bolts 304, to member 294, so that by shifting or rotating the shift handle 302 the member 294 is advanced sidewise in one direction or the other, in an amount depending on the pitch of the screw-thread.

Third sleeve section 290c of the sleeve 290 provides an open, cup-shaped cylinder surrounded by an inner splined surface 306, as best seen in Fig. 8. A series of friction disks 308a, 308b and 308c are freely slidable -- although blocked against rotation -- within the section 290c, and are interposed between their corresponding inner friction disks 284 mounted on the splined section 282.

It will thus be readily noted that rotation of the shift handle 302 in one direction, (depending on the direction of the threads of the members 294 and 300) will cause the engagement of the friction disks 284 and 308 as the result of the left-hand movement of the sleeve 290 due to the axial movement of the screw 294 in the left hand direction. Disengagement of the friction disks 284 and 308 is provided by turning the handle in the other direction.

Alternative displacement arrangements may be provided, such as levers or cams, to achieve the same result.

Further mounted on the section 290a is a gear pinion 310 keyed thereto by a key 312. It is rotatably attracted into an equilibrium or "zero" position by a coil spring 314 having one of its arms 315 fixed to gear pinion 310 and its other arm 317 affixed to the side wall 280.

An axle 316 extends parallel to the axle 272 and is rotatably supported between the side walls 278 and 280. The axle 316 carries a gear wheel 318 meshed with gear 310 and is keyed to the axle 316.

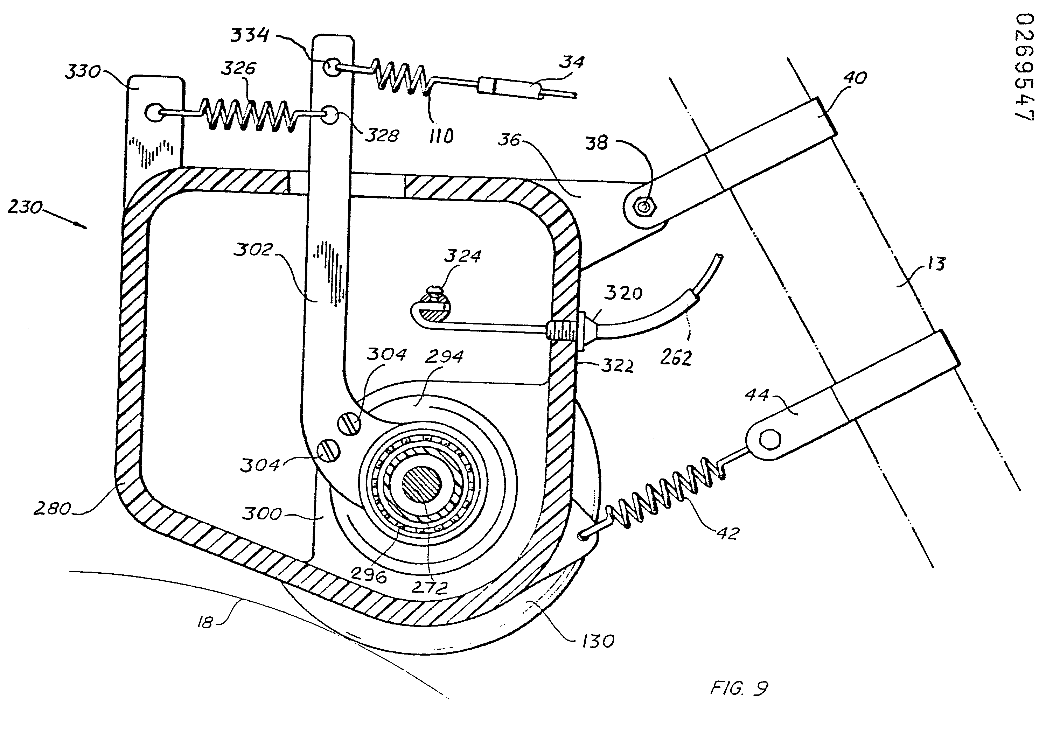

As already mentioned above, the traction cable 262 leads and is operatively connected, to clutch unit 231. The cable is passed through nipple 320 threaded to housing wall 322, and is partly wound on the axle 316 and fixed thereto, e.g. by a tightening screw 324, as clearly shown in Fig. 9.

Finally, it will be noted that the shift handle 302 is urged in one direction by a spring 326 connected between an aperture 328 formed in shift handle 302 and a mounting element 330 fixed to the unit 230 and is urged in the opposite direction by a spring 110 connected to the shift handle 302 at aperature 334, at one end, and, at its other end, to the traction cable 34 which, as above-described, is operated by the handle 20.

When the rider wants to brake, and applies the handle 20, the following operations occur: First, the cable 34, actuated by link 52, pulls at the shift handle 302, which causes rotation of the unit 230 about pivot pin 38 and brings the friction wheel 130 into contact with the road wheel 18. As a result of the sidewise force applied against the upper end of the shift handle 302, against the tension of the spring 326, which is weaker than the spring 110, a progressive movement of the assembly of the thread-member 294 and section 290c causes the progressive compacting of the friction disks 284 and 308, while the axle 272 is rotated by the friction-wheel 130.

Torque engagement between the friction disks causes a rotational displacement of the sleeve 290. The gear train 310 and 318 rotates the axle 316 with an increased or amplified moment, depending on the transmission ratio between the gears 318 and 310, (in practice - about 1:5). The traction cable 262 starts to become wound about the axle 316 and operate the shackle 58 which, in turn operates the front and rear braking mechanisms 22 and 26.

When the shift handle 302 is released by the cable 34, i.e. by release of handle 20, the shift handle 302 will be attracted by the spring 326 causing the disengagement by spacing of the friction disks on the one hand and, if necessary, the paying-out of the cable 362 by reverse rotation of the axle 316, enhanced by the coil spring 314. This extra safeguard is deemed necessary for cancelling or neutralizing the braking operation in case the conventional spring means of the braking mechanisms are insufficient to overcome the rotation moment amplified by the transmission ratio of the gears 318 and 310.

For as long as the friction operated system remains activated, no mechanical connection is established between the cable 24 and the traction plate 50 due to the slotted link 52; if, however the power system fails for any reason, the situation changes in the sense that a relative movement of the plate 50 with respect to the link 52 will eventually cause the engagement and traction of the plate by the cable, in substantially the conventional mode of operation.

In this manner it is also assured that if, due to a certain inadjustment, the friction generated operation is put out of function, i.e. right at the beginning of the tensioning of cable 24, the mechanism 22 will stop the bicycle irrespective of the traction of the cable 34.

The effective amount of friction force available for transferring the kinetic energy from the rotating road wheel 18 to power braking operation is adjusted and controlled by the amount of torque applied to the shift handle 302 about axle 272, which is in turn governed by the amount of force applied to spring 110 by operation of handle 20.

When the brake handle 20 is released, the unit 230 will be allowed to resume its inoperative position wherein the friction wheel 130 becomes disengaged from the road wheel 18.

As in the embodiment of Figs. 1 - 4, the friction power brake system illustrated in Figs 5 - 9 can be associated with a single one of the vehicle wheel-braking mechanisms, or alternatively, individual units may be installed for each one of the wheels.

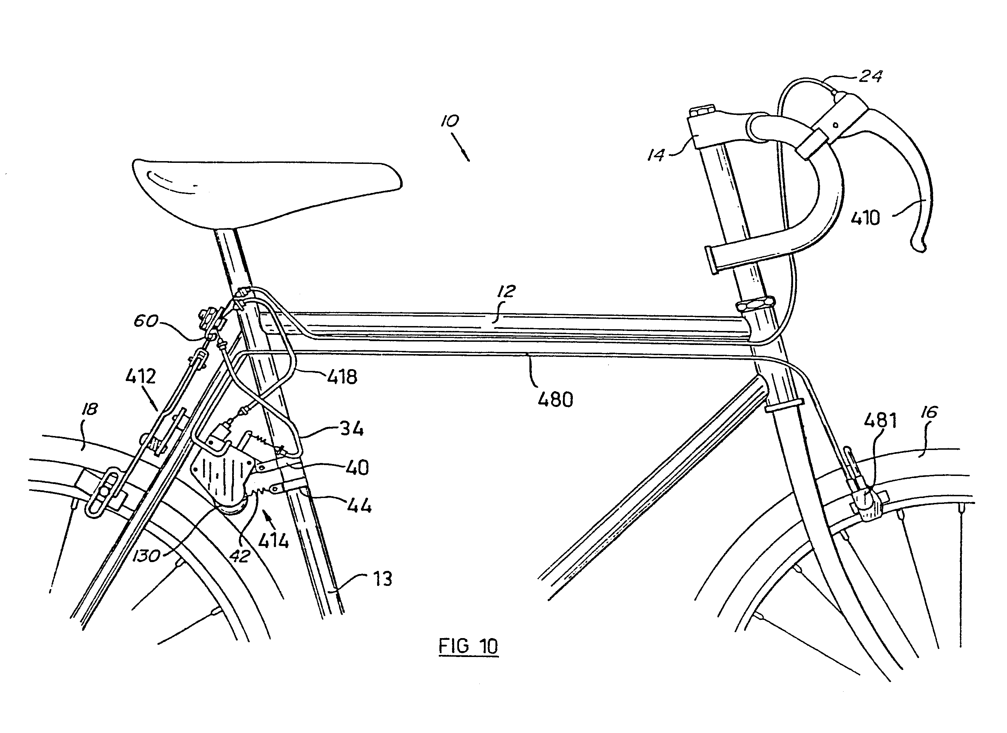

Reference is now made to Figs. 10 - 14 which illustrate an alternative embodiment of the invention. Elements which are identical to those illustrated in Figs. 1 - 5 are identified by the same reference numerals as used therein. A bicycle denoted 10 in Fig. 10 generally comprises a frame 12, a handle bar 14, a front road-wheel 16, and a rear road-wheel 18. A brake-handle 410 is mounted on the handle-bar 14, and coupled to a rear wheel conventional prong-type braking mechanism 412 as by a Bowden cable arrangement 24.

In accordance with an embodiment of the present invention there is provided an auxiliary hydraulic-booster brake-operating system which comprises a hydraulic pump assembly 414, and a traction cable 34, operatively coupled between the hydraulic pump assembly 414 and the brake handle 410.

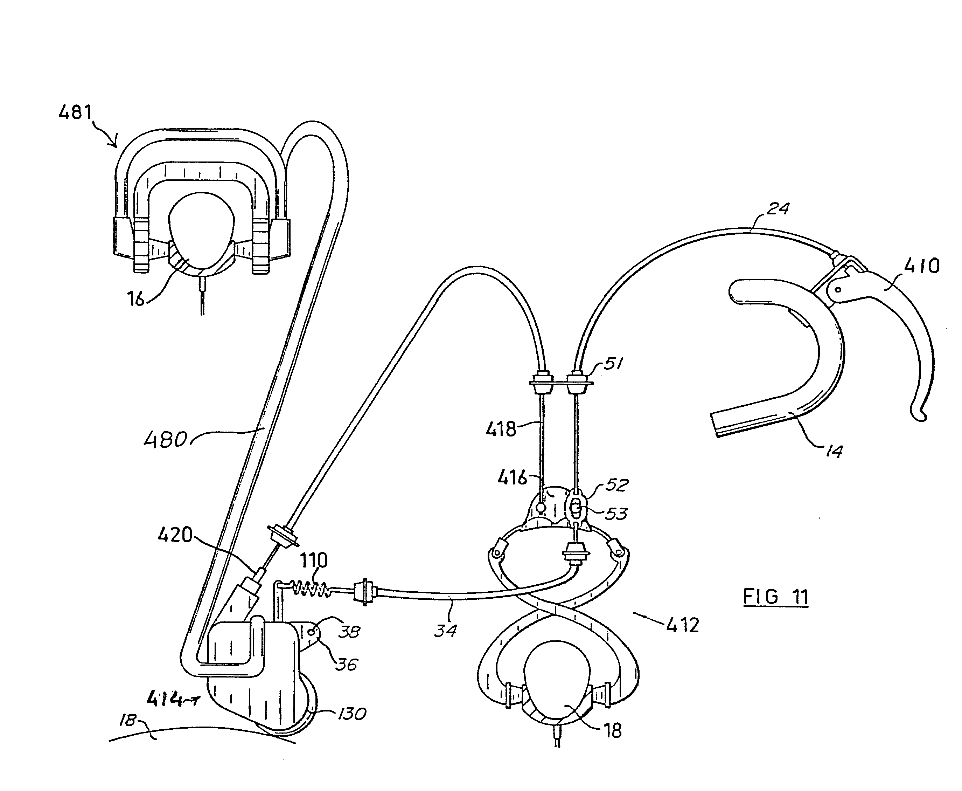

The hydraulic pump assembly 414 as pivotably mounted onto a frame-member 13 for selectable pivotal motion with respect thereto, by a mounting portion 36 (Fig. 11), a pivot pin 38 which defines the axis of pivotable motion, and a clamp 40 (Fig. 10) which engages frame-member 13. A coil spring 42, having one end attached to the hydraulic pump assembly 414 and an opposite end mounted at one end thereof onto the frame-member 13 by a clamp 44, urges the frame- member 13 in a counter-clockwise direction with respect to pivot pin 38 as seen in Fig. 10, and thus away from engagement with the rear road wheel 18.

Referring now to Fig. 11, it is seen that the rear wheel brake mechanism 412 is conventionally operated by the brake-handle 410, which is coupled by the cable 24 to a displaceable traction plate 416 via a standard cable nipple 51. (Such nipples are installed wherever required and will not be specifically denoted.)

The traction plate 416 operates the rear wheel brakes mechanism 412 in a conventional manner, except that (for a reason to be explained below) the cable 24 connection thereto is made with a certain degree of play, as may be provided by a slotted link 52 and coupling stud pin 53.

The same link 52 (rather than the plate 416) is coupled to the hydraulic pump assembly 414 by the cable 34.

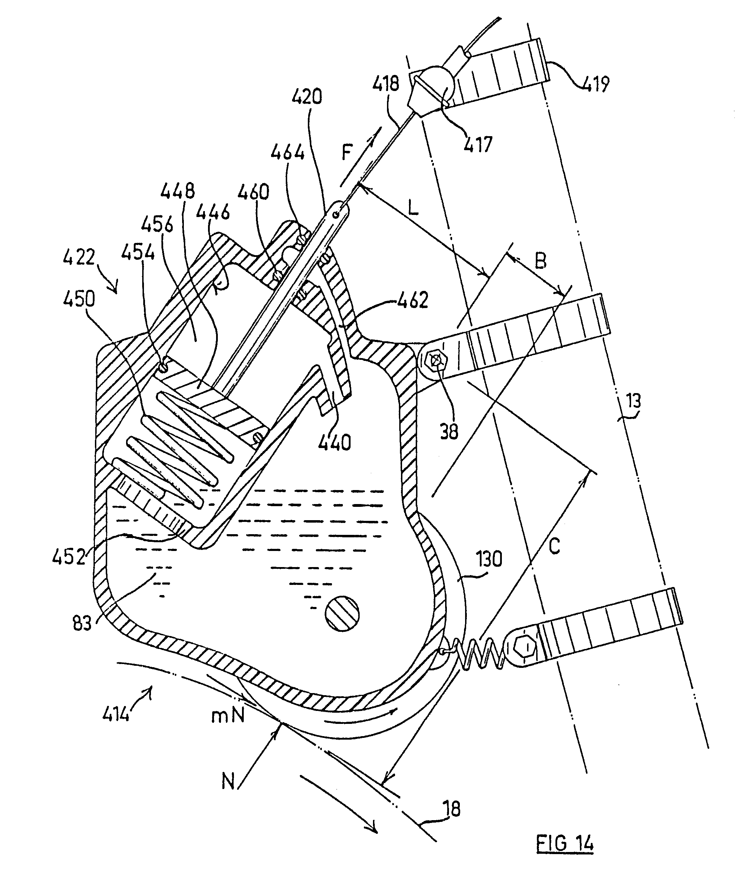

Traction plate 416 is coupled via a cable 418, (independently of its connection to cable 24 as described above) to a piston rod 420 of a cylinder and piston device 422. It is noted that in this embodiment, the cylinder and piston device 422 is located within the hydraulic pump assembly 414, as seen in Fig. 14.

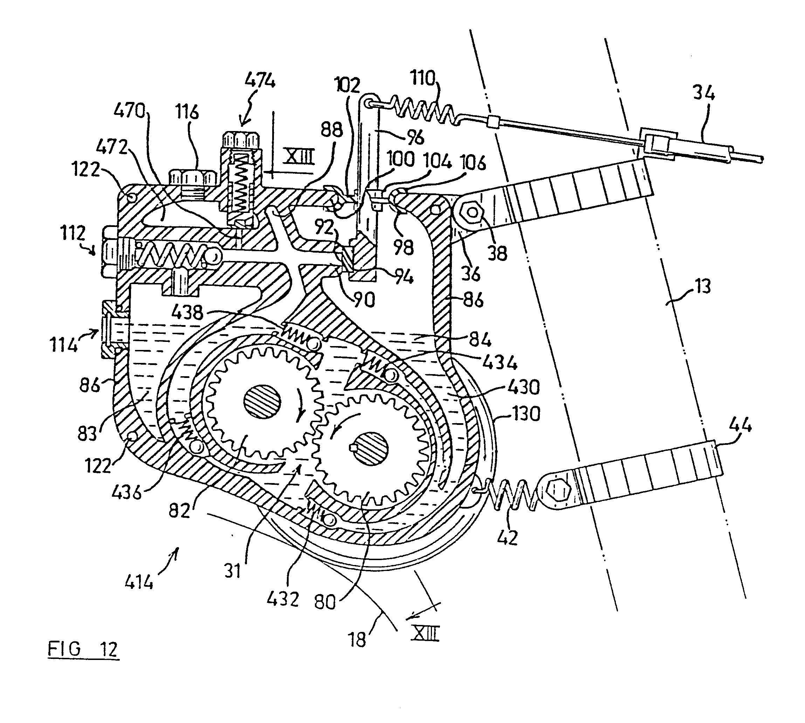

Reference is now made of Figs. 12, 13 and 14 and in particular to Fig. 12, which illustrates in detail the structure of the pump assembly 414. Pump assembly 414 comprises a rotational pump, indicated generally by reference numeral 31, comprising interdigitated gear-wheels 80 and 82 adapted to supply, under pressure, hydraulic fluid 84 from reservoir 83 of pump-housing 86, via a conduit 430 and via either of inlet check valves 432 and 434 out through either of outlet check values 436 and 438 into a supply outlet passage 88 leading to a conduit 440 (Fig. 14).

The paired check valves are provided in order to permit pumping and providing powered braking irrespective of the direction of the movement of the rear road wheel 18. Thus, when the gear-wheels 80 and 82 turn in the directions indicated in Fig. 12, check valves 436 and 434 are open and when the gear-wheels 80 and 82 turn in directions opposite to those indicated in Fig. 12, valves 432 and 438 are open.

The remainder of the structure of the pump assembly 414 is essentially the same as that described in connection with Fig. 3.

Cylinder and piston device 422 comprises a cylinder 446, a piston 448, and a compression spring 450. An aperture 452 formed at the lower end of cylinder 446 serves to drain hydraulic fluid which may leak past a piston seal 454 directly to a hydraulic fluid reservoir 83. A pressure compartment 456 defined within cylinder 446, is sealed by piston seals 454 and 460 and is connected by a hydraulic fluid conduit 440 to supply outlet passage 88 of a rotational pump 31.

Fluid leakage past seal 460 is prevented by the provision of a fluid drainage conduit 462 extending from a location downstream of seal 460 to reservoir 83. Conduit 462 is sealed from the outside by means of a seal 464.

In accordance with a preferred embodiment of the present invention, an opening 470, which is of small area as compared with outlet port 92 is provided communicating between supply outlet passage 88 and reservoir 83 via a volume 472 which is connected to reservoir 83, the connection not being seen in Fig. 12. The size of the opening 470 is governed by a spring loaded closure assembly 474. Assembly 474 is operative to close opening 470 except when the fluid pressure at supply outlet passage 88 exceeds a predetermined pressure, which may be selected to be typically one fifth of the maximum permitted pressure established by pressure overload relieve valve 112.

The provision of opening 470 and associated assembly 474 provides a pressure bleed from pressures above the predetermined pressure established by assembly 474 down to that predetermined pressure.

This apparatus provides an important function of preventing overturning of a bicycle due to excessive braking of the front wheel, while the rear wheel becomes decoupled from the ground surface. This function will be described in detail hereinbelow.

Returning now to Fig. 12, it is seen that a passage 90 branches off supply outlet passage 88 and has an outlet port 92. Outlet port 92 is adapted to be closed by a plug member 94 made of rubber, leather, or any other suitable material, which is disposed at one end of a pivotable rod 96. The rod 96 extends through an opening 98 formed in an upper wall portion 100 of the pump housing 86. The mounting of the rod is preferably made by an elastic joint member 102 which comprises a central reinforced sleeve 104 and a circumferential lip 106 by which the joint is attached inside the opening 98. The rod 96 is connected at its end which projects outside the pump-housing 86, to the cable 34 via a tension coil-spring 110.

The structure and operation of plug member 94 may be of any suitable design. Two specific examples of structures that would be useful are illustrated in diagrams 9 - 13 and 9 - 14 at pages 368 and 369 of HANDBOOK OF HYDRAULIC RESISTANCE COEFFICIENTS OF LOCAL RESISTANCE AND OF FRICTION by I. E. Idel' Chik, U.S. Department of Commerce, National Technical Information Service, AEC TR 6630, 1960.

The hydraulic pump assembly 414 also typically includes a pressure overload relief ball valve 112 of any suitable conventional design, a transparent hydraulic fluid level guage 114, and a hydraulic fluid filling and vent plug 116.

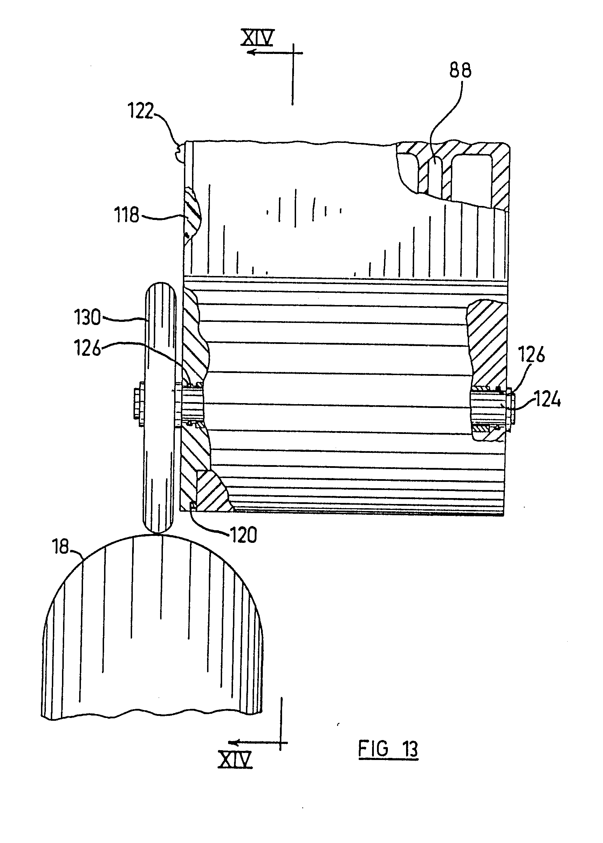

Pump housing 86 is closeable by a cover 118 (Fig. 13), provided with a seal 120 and screws 122.

Gear wheel 80 is drivingly coupled via its axle 124, which is sealed by gaskets 126, to a friction wheel 130 which constitutes the power generator of the pump when the friction wheel is frictionally engaged with the rear road wheel 18. This engagement will now be described.

It will be recalled that the hydraulic pump assembly 414 is pivotally mounted about an axis defined by pivot pin 38 and is normally urged by spring 42 out of engagement with the road wheel 18, such that the friction-wheel 130 is distanced from the tire of the rear road-wheel 18. Thus, the fact that the power-brake system of the present invention is associated with a bicycle does not interfere with the normal riding of the bicycle.

When the rider wants to brake and presses the brake handle 410, the following operations will occur: First, cable 24 actuates link 52, which in turn pulls cable 34. Cable 34, via spring 110, pulls on rod 96, which causes the pivoting of the entire hydraulic pump assembly 414 and brings the friction wheel 130 into operative contact with the road-wheel 18.

As a result of the clockwise-directed force (in the sense of Fig. 12) applied to the upper end of the rod 96, plug member 94 firmly closes over the outlet port 92 of the passage 90. The pump 31, driven by rotation of the friction wheel 130, forces the hydraulic fluid under pressure via supply outlet passage 88 to pressure compartment 456 of the cylinder and piston device 422. The pressure in supply outlet passage 88 may be bled off at a desired rate via adjustable opening 470, as described above.

Piston 448 is inwardly displaced and, via cable 418, pulls the rear wheel brake mechanism 412 via displaceable traction plate 416. Simultaneously, hydraulic fluid under pressure is provided from supply outlet passage 88 via conduit 480 (Fig. 11) to a front wheel disk brake assembly 481, such as that commercially available from Gustav Magenwirth GmbH & Co. of Bad Urach, Germany. This hydraulic disk brake assembly typically operates using rubber pads which frictionally engage the rim of the front wheel.

It is noted that conduit 440 shown in Fig. 14 and conduit 480 shown in Fig. 11 are both connected to supply outlet passage 88, shown in Fig. 12. This connection is not seen in the drawings.

For as long as the hydraulically operated system remains activated, no mechanical connection is established between the cable 24 and the traction plate 416 due to the slotted link coupling 52; if, however the power system fails for any reason, the situation changes in the sense that a relative movement of the plate 416 with respect to the link 52 will eventually cause the engagement and traction of the plate by cable 24, in substantially the conventional mode of operation.

The effective amount of hydraulic pressure available for the braking operation is adjusted and controlled by the amount of force applied to the plug member 94, the arrangement being such that hydraulic fluid can by-pass the pressurized working line of the system -- passage 88, conduit 440, and pressure compartment 456 -- and become drained for re-circulation through the port 92 back to the fluid reservoir 84. In other words, the more firmly is the plug 94 closed against the port 92 -- the higher becomes the useful pressure conveyed by the pump 31 to the piston 488.

When the rider presses on brake handle 410, force is applied via cables 24 and 34 on spring 110, thus pulling rod 96 and causing the closure of port 92. Once port 92 is closed, continued pulling on rod 96 produces rotation of hydraulic pump assembly 414 about axle 38 and thus causes friction wheel 130 to initially engage road wheel 18.

Friction wheel 130 is rotated by road wheel 18 and operates pump 31, causing hydraulic fluid to be forced into compartment 456, producing pressure therein. This pressure forces piston 448 downward and applies a tension force F to cable 418 via piston rod 420.

The force F applies rotational torque to the hydraulic pump assembly 414 in a clockwise direction in the sense of Fig. 14 about pivot 38. This produces a moment of rotation M, which may be expressed as $M = F \times L$, where L is the perpendicular distance between pivot 38 and the direction of F.

L is selected, as illustrated in Fig. 14, such that the normal force of engagement between friction wheel 130 and road wheel 18, here termed N, is sufficiently large to transfer from road wheel 18 to friction wheel 130 sufficient force to enable operation of the power braking system as described in Figs. 10 -14. N is given by the following expression and it can be seen that as F increases, N also increases:

$$N = p \times pi\ (D^2 - d^2) \times (L/(B + mc))4 \quad (1)$$

where p = the pressure in compartment 456

D = the diameter of piston 422

d = the diameter of piston rod 420

L = the perpendicular distance between pivot 38 and cable 418 in Fig. 13

B = the perpendicular distance between pivot 38 and the axis of the normal force N (Fig. 14)

c = the perpendicular distance between pivot 38 and the tangent to N which passes through the point of engagement between friction wheel 130 and rear wheel 18.

m = the friction coefficient between friction wheel 130 and road wheel 18 ( It is taken to be of positive sign for motion of the road wheel 18 in the forward direction (in the sense of Fig. 14) and to be of negative sign for motion of the road wheel 18 in the backwards direction).

pi is taken to equal 3.1416

In operation, the amount of force exerted by the rider on brake handle 410 need only be sufficient to provide initial engagement of friction wheel 130 with road wheel 18. When the rider presses on brake handle 410, force is applied via cable 24 on spring 110, thus pulling rod 96 and generally causing the closure of port 92. In this way, the rider controls the operation of the power braking system. The force N, which increases automatically with an increase in F, is not limited by the force applied by the rider on the brake handle 410, although it is controlled thereby.

Specifically, when the rider applies force to brake handle 410, via cable 34, thereby tensioning spring 110, arm 96 is rotated, thereby causing plug member 94 to sealingly engage outlet port 92 such that further rotation of arm 96 causes rotation of the entire hydraulic pump assembly 414 in a clockwise direction about axle 38 against the urging of spring 42. When at least a predetermined force is exerted on brake handle 410, sufficient to overcome the spring force of spring 42, the friction wheel 130 is brought into frictional contact with road wheel 18.

Upon establishment of frictional contact, the rotation of road wheel 18 causes operation of the hydraulic pump 31, while at the same time, outlet port 92 is blocked. Thus hydraulic fluid pressure is built up by pump 31 in chamber 456. This pressure produces an initial force F on piston 448 which is transferred via piston rod 420 to cable 418.

The force F also acts to apply a rotational moment to the hydraulic pump assembly 414, urging clockwise rotation thereof about pivot 38 in the sense of Fig. 12. Thus it may be appreciated that the force F replaces the force originally applied via cable 34 by the rider for the purpose of maintaining frictional engagement between the friction wheel 130 and the road wheel 18.

The force exerted by the rider on the brake handle 410 nevertheless has a control function, since if the rider releases the brake handle 410, the opening port 92 becomes unsealed and thus the operation of the pump 31 no longer produces the force F, and powered braking is terminated.

The force exerted by the rider on the brake handle 410 is not limited to an On-Off control function. This may be appreciated by the fact that the pressure p built up in chamber 456 cannot exceed the pressure in supply outlet passage 88. The maximum pressure that can be built up in supply outlet passage 88 is determined by the force exerted by plug member 94 on outlet port 92. This force is directly governed by the amount of force exerted by the rider on the brake handle 410.

When the brake-handle 410 is released, and the force F is lowered due to bleeding of the hydraulic fluid via opening 92, the hydraulic pump assembly 414 is allowed to resume its inoperative positive wherein the friction wheel 130 is disengaged from the road-wheel 18.

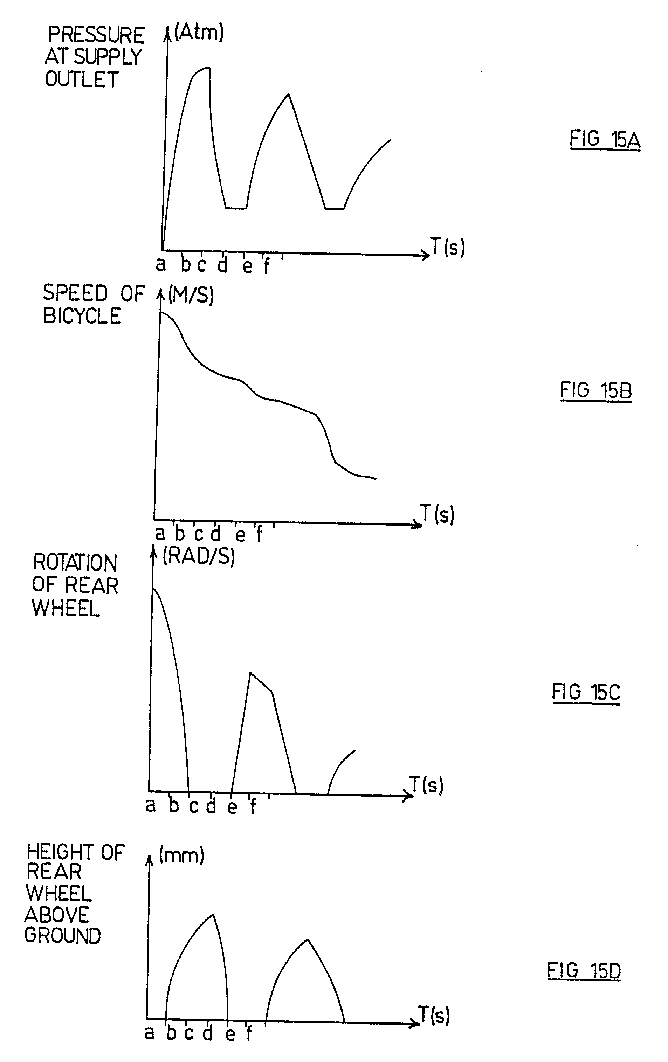

It is a particular feature of the invention that the provision of opening 470 provides an automatic anti-overturning function, which is operative to prevent overturning of the bicycle due to sudden braking of the front wheel, notwithstanding uninterrupted operation of the front wheel brakes by a rider. This function will now be described in detail with reference to Figs. 15A - 15D, which provide a general illustration of the functioning of the apparatus over time. Fig. 15A illustrates the pressure at the supply outlet passage 88, while Fig. 15B illustrates the overall speed of the bicycle. Fig. 15C illustrates the speed of rotation of the rear wheel, while Fig. 15D illustrates the distance of the rear wheel above the ground surface.

In accordance with the present invention, when the rider applies maximum force to brake handle 410, hydraulic pressure is built up which applies braking force to the front and rear wheels. In such situations it might occur that the rear wheel becomes disengaged from the ground surface, while the normal force and the frictional force between the front wheel and the ground surface increases, thus producing a potential overturning situation.

In such a situation of disengagement of the rear wheel from the ground surface, the pressure at supply outlet passage 88 varies as illustrated in Fig. 15 A. Upon application of force to brake handle 410, at time a, pressure builds up quickly at supply outlet passage 88 due to the operation of pump 31.

Braking produced in response to this pressure buildup increasingly slows the rotation of the rear wheel, indicated in Fig. 15C. As the pressure at supply outlet passage 88 approaches its maximum, the rear wheel 18 begins to rise and lose contact with the ground surface. This loss of contact begins to occur at time b and results in a drastic reduction in the speed of rotation of the rear wheel, since it is being braked while out of contact with the ground surface.

Since pump 31 is driven by rotation of rear wheel 18, the reduction in its speed of rotation causes a drastic reduction in the hydraulic fluid supplied to supply outlet passage 88. Bleeding of hydraulic fluid from supply outlet passage 88 via outlet 470 produces a significant reduction in the pressure at supply outlet passage 88, from time c until the predetermined pressure established by spring loaded closure assembly 474 is reached at time d.

The reduction in pressure at supply outlet passage 88 greatly reduces the braking at the front wheel 16, thus causing the rear wheel to lower at re-establish contact with the ground surface at time e.

Upon reestablishment of such contact, the speed of rotation of the rear wheel increases drastically from time e to time f producing a corresponding pressure buildup at the supply outlet passage 88 and corresponding braking, which once again results in raising of the rear wheel out of ground contact and repitition of the cycle described hereinabove at decreasing amplitudes until the rear wheel no longer rises out of ground contact.

In this manner overturning of the bicycle is prevented notwithstanding sustained maximum force brake operation by the rider.

The provision of assembly 474 enables residual braking to be provided even when the bicycle is stationary or nearly stationary and the rider presses on the brake handle 410.

According to an alternative embodiment of the invention, assembly 474 may be replaced by a selectably adjustable flow valve which determines the rate of pressure bleeding from supply conduit passage 88 and enables such bleeding to be eliminated, if desired.

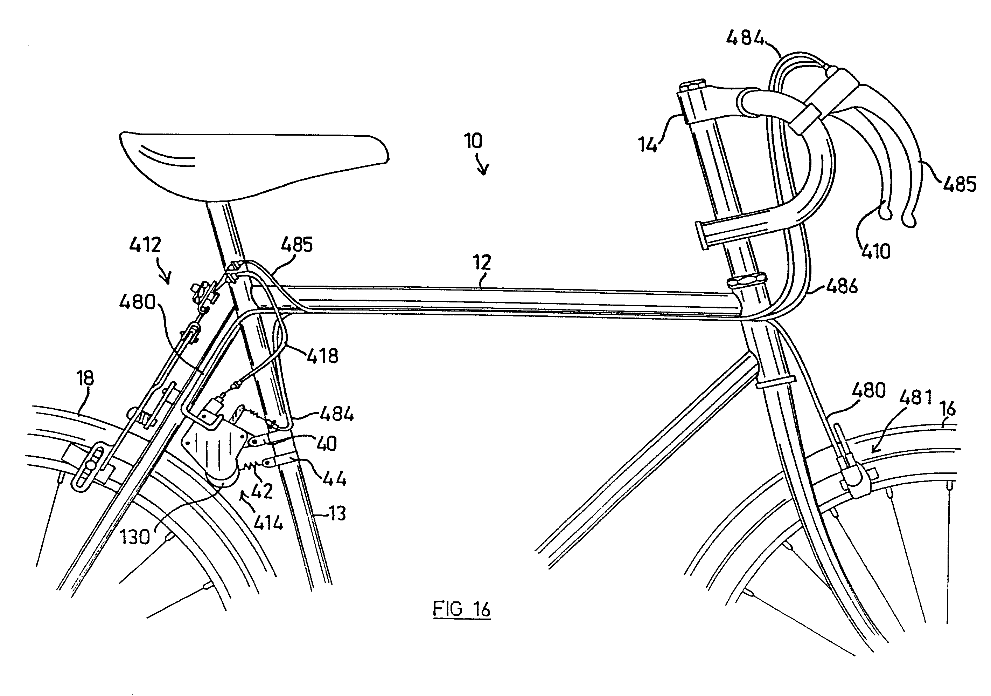

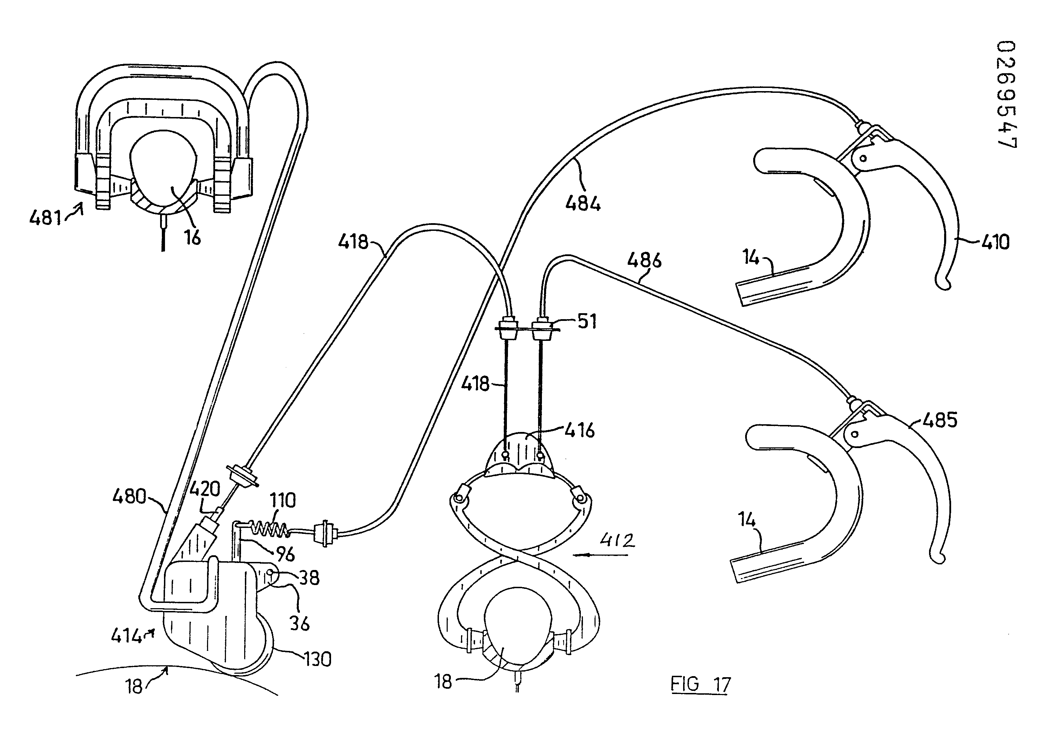

Reference is now made to Figs. 16 and 17. Elements which are identical to those illustrated in Figs. 1 - 5 and 10 -14 are identified by the same reference numerals as used therein. A bicycle denoted 10 in Fig. 16 generally comprises a frame 12, a handle bar 14, a front road-wheel 16, and a rear road-wheel 18. A brake-handle 410 is mounted on the handle-bar 14, and coupled to a hydraulic pump assembly 414 as by a Bowden cable arrangement 484 in accordance with an embodiment of the present invention.

The hydraulic pump assembly 414 is pivotably mounted onto a frame-member 13 for selectable pivotal motion with respect thereto, by a mounting portion 36 (Fig. 17), a pivot pin 38 which defines the axis of pivotable motion, and a clamp 40 (Fig. 16) which engages frame member 13. A coil spring 42, having one end attached to the hydraulic pump assembly 414 and an opposite end mounted at one end thereof onto the frame-member 13 by a clamp 44, urges the frame member 13 in a counter-clockwise direction with respect to pivot pin 38 as seen in Fig. 16, and thus away from engagement with the rear road wheel 18.

Referring now to Fig. 17, it is seen that the rear wheel brake mechanism 412 is conventionally operated by the brake-handle 485, which is coupled by a cable 486 to a displaceable traction plate 416 via a standard cable nipple 51.

The traction plate 416 operates the rear wheel brake mechanism 412 in a conventional manner.

Traction plate 416 is coupled via a cable 418 to a piston rod 420 of a cylinder and piston device 422. It is noted that in this embodiment, the cylinder and piston device 422 is located within the hydraulic pump assembly 414.

When the rider wants to brake and presses the handle 410, the following operations will occur: First, a cable 484, via spring 110, pulls on rod 96, which causes the pivoting of the entire hydraulic pump assembly 414 and brings the friction wheel 130 into operative contact with the rear road-wheel 18.

As a result of the clockwise-directed force (in the sense of Fig. 16) applied to the upper end of the rod 96, plug 94 firmly closes over the outlet port 92 of the passage 90. (See Fig. 12.) The pump 31, driven by rotation of the friction wheel 130, forces the hydraulic fluid under pressure via supply outlet passage 88 to compartment 456 (Fig. 14) of the cylinder and piston device 422. The pressure in supply outlet passage 88 may be bled off at a desired rate via adjustable opening 470, as described above.

Piston 448 (Fig. 14) is inwardly displaced and, via cable 418, pulls the rear wheel brake mechanism 412 via plate 416. Simultaneously, hydraulic fluid under pressure is provided from supply outlet passage 88 via conduit 480 to a front wheel disk brake assembly 481.

When the rider presses on brake handle 410, force is applied via cable 484 on spring 110, thus pulling rod 96 and causing the closure of outlet port 92. Once port 92 is closed, continued pulling on rod 96 produces rotation of hydraulic pump assembly 414 about axle 38 and thus causes friction wheel 130 to initially engage rear road wheel 18.

Friction wheel 130 is rotated by road wheel 18 and operates pump 31, causing hydraulic fluid to be forced into compartment 456, producing pressure therein. This pressure forces piston 448 downward and applies a tension force F to cable 418 via piston rod 420. The pressure produced by pump 31 causes hydraulic fluid to pass through conduit 480 to disk brake assembly 481 for braking of the front wheel 16.

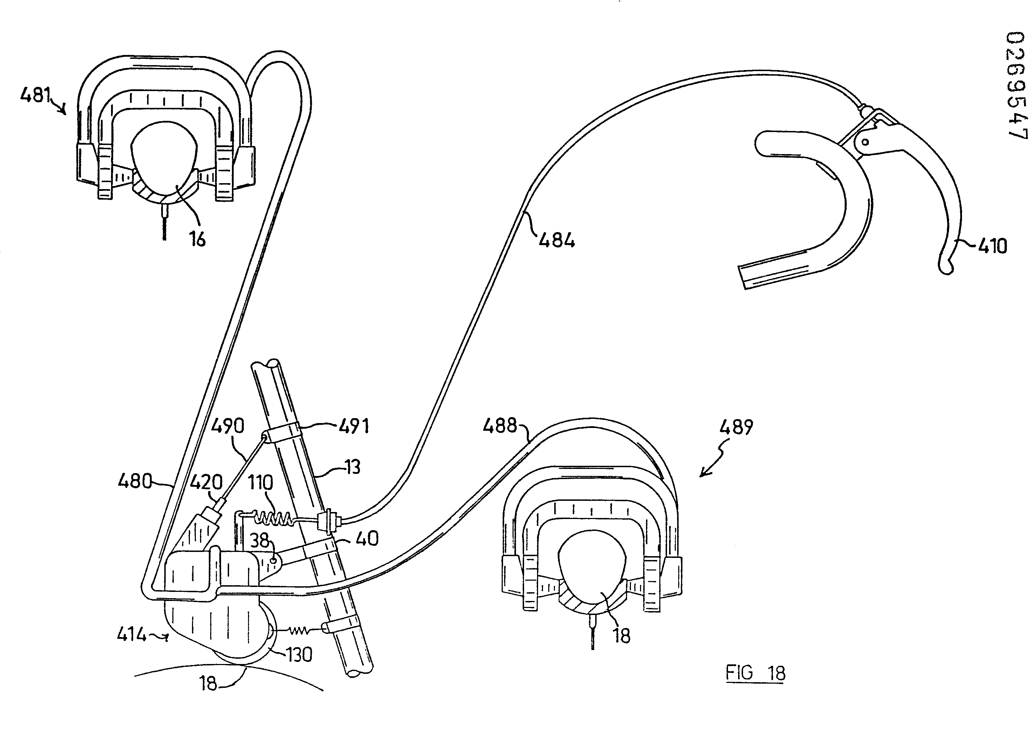

Reference is now made to Fig. 18, which illustrates an alternative embodiment of the apparatus of Fig. 17. The apparatus of Fig. 18 is similar to that of Fig. 17 except as described hereinbelow: Only a single brake handle 410 is associated with the hydraulic system. Coupled in fluid communication with conduit 480 is a conduit 488 which extends to a rear disk brake assembly 489 for braking of the rear wheel 18. Piston rod 420 is fixedly coupled via a cable 490 and a clamp 491 to frame member 13.

When the rider presses on brake handle 410, force is applied via cable 484 on spring 110, thus pulling rod 96 and causing the closure of port 92. Once port 92 is closed, continued pulling on rod 96 produces rotation of hydraulic pump assembly 414 about axle 38 and thus causes friction wheel 130 to initially engage road wheel 18.

Friction wheel 130 is rotated by road wheel 18 and operates pump 31, causing hydraulic fluid to be forced into compartment 456, producing pressure therein. This pressure forces piston 448 downward and applies a tension force F to cable 490 via piston rod 420. This causes further rotational force to be applied to pump assembly 414 about axis 38 to provide enhanced frictional engagement between friction wheel 130 and rear wheel 18.

The pressure produced by pump 31 causes hydraulic fluid to pass through conduit 480 to disk brake assembly 481 for braking of the front wheel 16 and through conduit 488 to disk brake assembly 489 for braking of the rear wheel 18.

This arrangement, which requires only a single brake handle for operating the hydraulic system, enables a conventional or other mechanical backup to be provided using an additional brake handle (not shown).

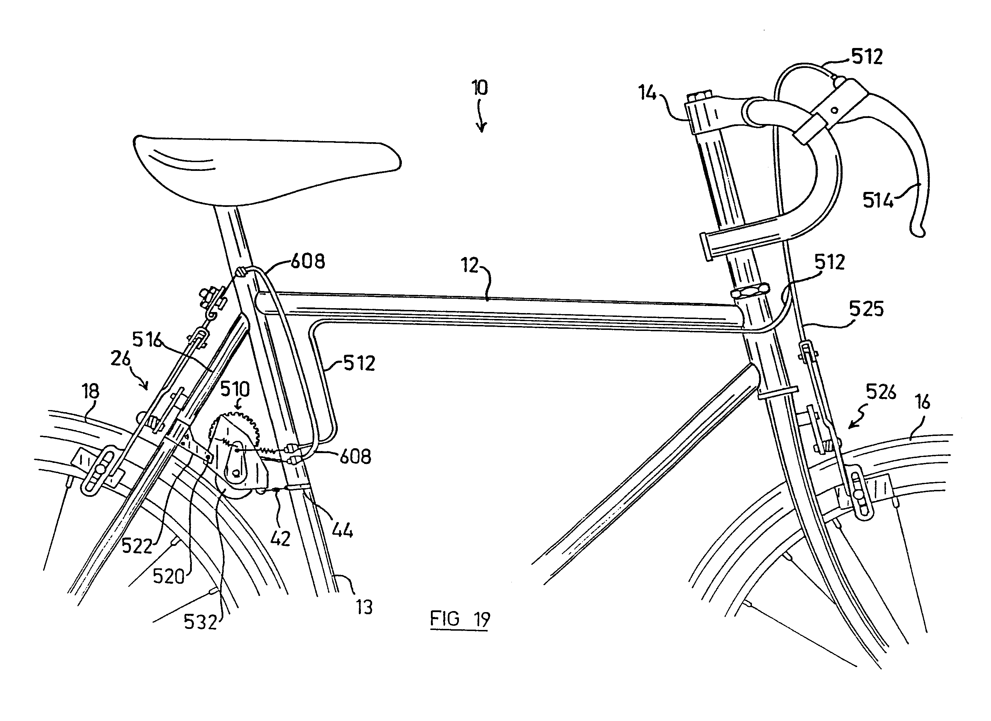

According to a further alternative embodiment of the present invention, a further alternative mechanical embodiment of the powered braking system may be provided, as illustrated in Figs. 19 - 24. For the sake of conciseness and clarity, those elements in the embodiment of Figs. 19 - 24 which are identical to corresponding elements described hereinabove in connection with Figs. 1 - 4 and 5 - 9 are referred to in Figs. 19 - 24 by identical reference numbers and are not described here once again.

According to the present invention there is provided an auxilliary, friction clutch driven brake-operating system which comprises a clutch and gear transmission unit 510 and a traction cable 512, operatively coupled between the unit 510 and the brake handle 514. The unit 510 is mounted on a pair of frame-members 516 by a pivot pin 520, and a clamp 522 and is attracted in the direction of the frame-member 13 by coil-spring 42, attached to the frame-member 13 by clamp 44.

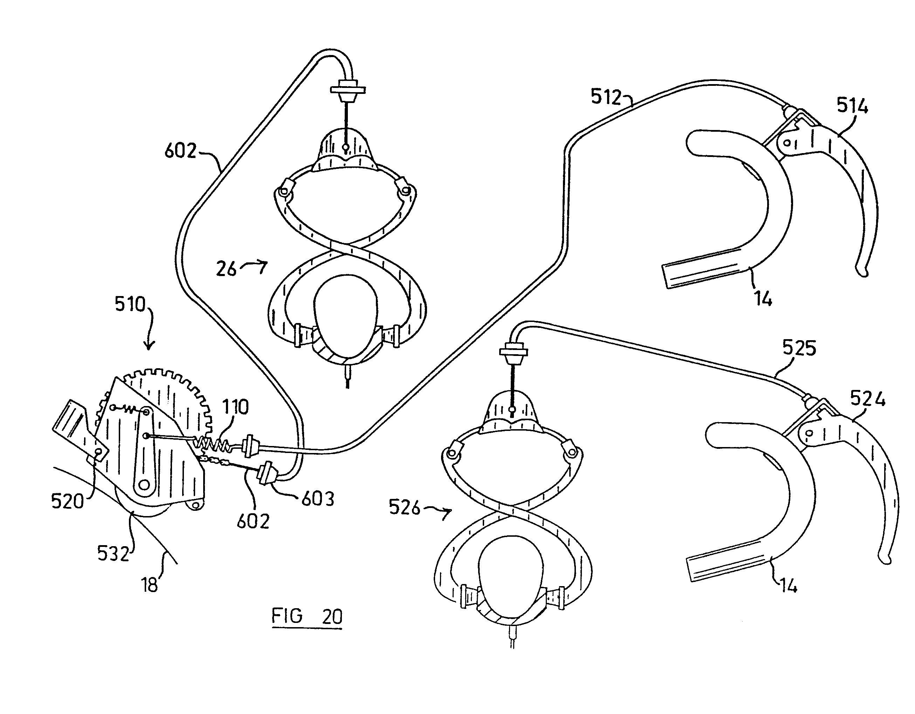

Fig. 20 illustrates a conventional front wheel braking arrangement comprising brake handle 524, cable 525 and front wheel braking mechanism 526.

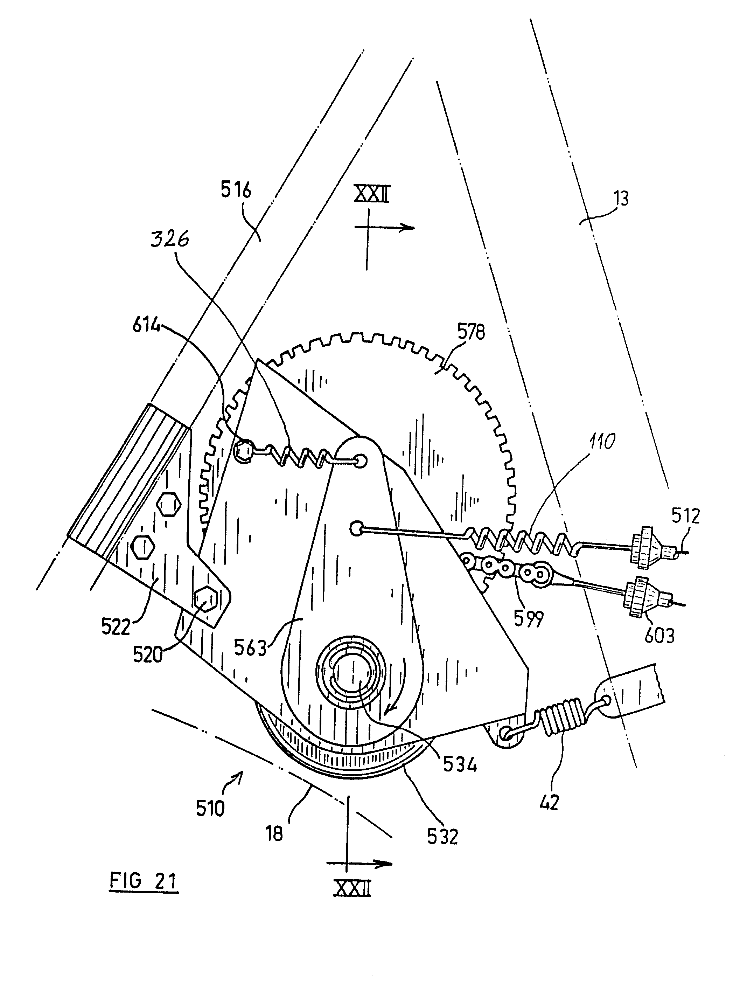

The construction of the mechanical prime mover, in the form of clutch and gear transmission unit 510 and the clutch unit thereof 530 will now be described with reference to Figs. 21 -24.

A friction wheel 532 is formed as an outer part of clutch unit 530 and is rotatably mounted with respect to an axle 534 by suitable bearings 536 and 538 located between side walls 540 and 542 of unit 510. As will be described below, the friction-wheel 532 is adapted to become engaged and disengaged by a tilting movement of the unit 510 as a whole, through application of the brake handle 514.

The axle 534 has a splined section 544 which is configured to have a cross sectional configuration of a circular gear slidingly -- but not rotatably -- supporting a series of friction clutch or coupling disks 546a, 546b and 546c. The disk 546a, at the extreme left-hand side of the splined section 544 is blocked against further sidewise sliding thereof by a collar 548 (or any equivalent blocking member). Collar 548 is fixedly mounted with respect to axle 534 by means of a roll pin 550.

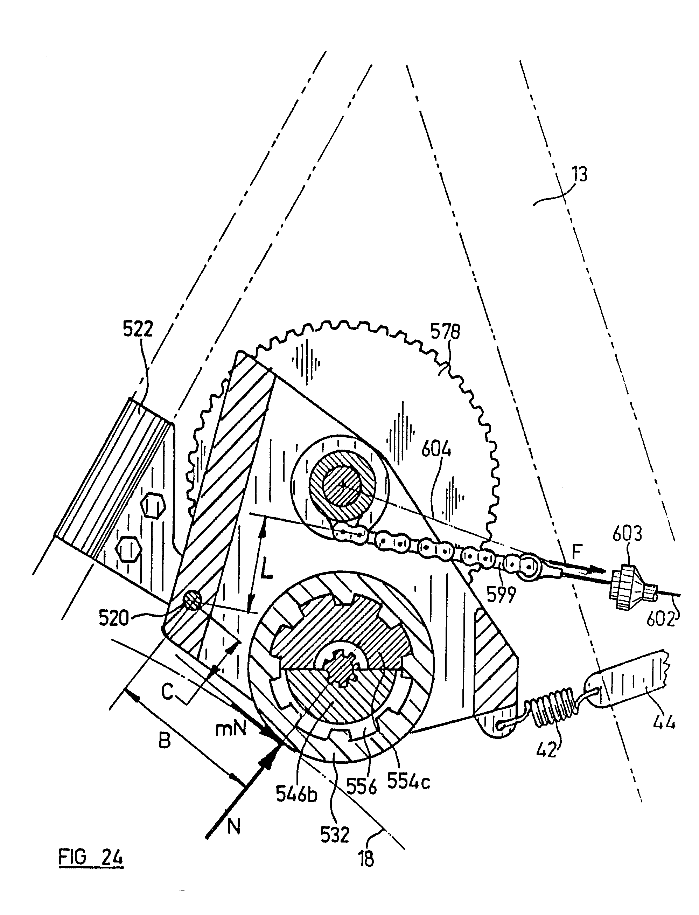

Disposed intermediate friction disks 546a, 546b and 546c are a plurality of intermediate friction disks 554a, 554b and 554c, which are splined at their outer periphery onto a corresponding inwardly splined surface 556 of friction wheel 532, as seen in Fig. 24. This splined engagement provides transfer of torque from the friction wheel 532 to the friction disks 554a, 554b and 554c, while permitting the friction disks to slide axially with respect to the friction wheel 532 along an axis 557.

Axle 534 is mounted on a pair of bearings 560 and 562. Bearing 560 is seated in side wall 540 and permits rotational and sliding motion of the axle 534 with respect to axis 557. Bearing 562 is seated onto a shift handle 563 which is intended to rotate about axis 557 with respect to side wall 542 in response to actuation of brake handle 514 via cable 512.

Bearing 562 is arranged to permit rotational motion of the axle 534 about axis 557. A plurality of retaining rings 564, 566, 568 and 572 serve retain axle 534 against axial movement relative to the shift handle along axis 557.

Shift handle 563 is threadably engaged with a corresponding threading 571 formed in side wall 542. This arrangement converts rotational motion of the shift handle bout axis 557 in response to brake handle actuation into axial movement of the shift handle along axis 557 and thus axial movement of the axle 534 along axis 557.

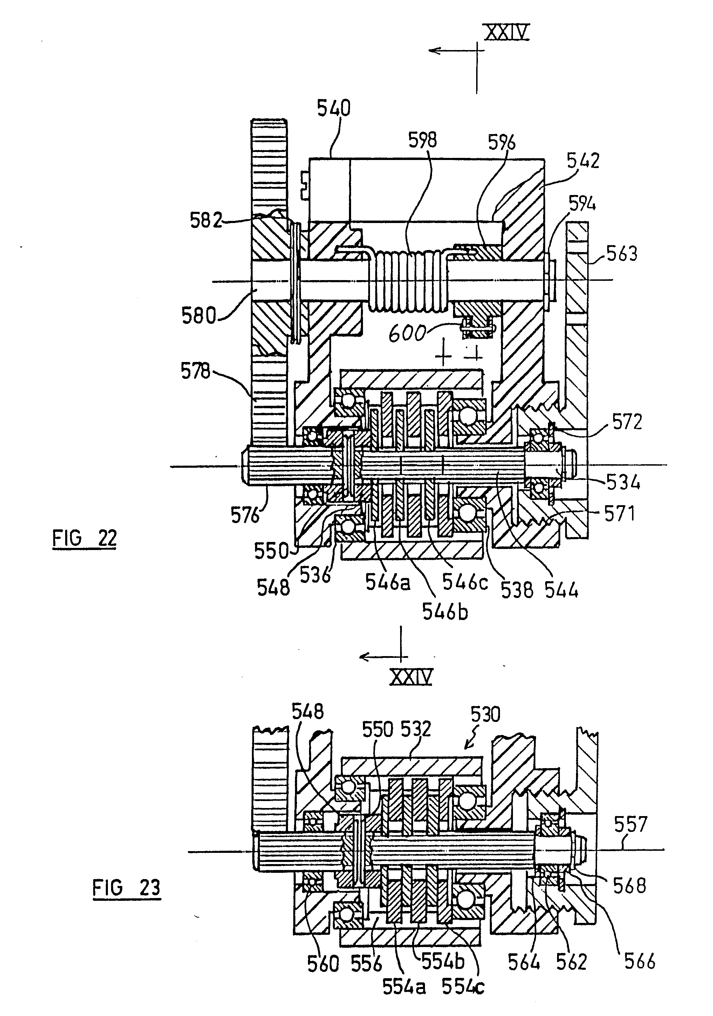

It is noted that Fig. 22 ilustrates the clutch in an open orientation, while Fig. 23 illustrates the clutch in a partially or completely engaged or closed orientation. Transformation of the clutch from the open orientation of Fig. 22 to the closed orientation shown in Fig. 23 is provided by rotation of shift handle 563 about axis 557, causing axial movement of axle 534 to the right, in the sense of Figs. 22 and 23. This axial movement causes collar 548, which is axially fixed onto axle 534 by means of roll pin 550 to push friction disks 546a, 546b, 546c and intermediate friction disks 554a, 5554b and 554c to the right, in forced frictional engagement, thus providing a frictional mechanical connection between the friction wheel 532 and axle 534.

An extreme end 576 of axle 534, having the splined configuration of the axle 534 defining a circular gear engages a larger radius gear 578. Gear 578 is mounted onto an axle 580, typically by means of a roll pin 582. Axle 580 is rotatably supported on side walls 540 and 542. The portions of the side walls 540 and 542 which engage axle 580 may be formed of plastic or of any other suitable material so as to act as bearings.

Axial movement of axle 580 relative to side walls 540 and 542 is prevented by the provision of a retaining ring 594 and a collar 596. Collar 596 is fixedly attached to axle 580 and also serves as a coil spring retainer to which is fixedly attached an end of a coil spring 598, which is coiled about axle 580. The opposite end of coil spring 598 is fixedly attached to side wall 540. Collar 596 also serves as a spool for winding of a chain 599 thereabout. Chain 599 is fixedly attached at one end thereof to collar 596 by means of a link 600 and at its other end is attached to a free end of a cable 602 via a nipple 603. Cable 602 extends to rear braking mechanism 26.

When the rider wants to brake, and applies the handle 514, the following operations occur: First, the cable 512 pulls the shift handle 563, which causes rotation of the unit 510 about pivot pin 520 and brings the friction wheel 532 into contact with the rear road wheel 18. As a result of the sidewise force applied against the upper end of the shift handle 563, against the tension of the spring 326, which is weaker than the spring 110, a progressive movement of the assembly of the shift handle 563 causes the progressive frictional engagement of the friction disks 546 and 554, causing the axle 534 to be rotated by the friction-wheel 532.

Rotation of axle 534 causes gear 578 to rotate axle 580 with an increased or amplified moment, depending on the transmission ratio between gear 578 and the end 576 of axle 534, (in practice - about 1:7). Chain 599 begins to be wound about the collar 596 and pulls on cable 602 which, in turn operates the rear braking mechanism 26.

When the shift handle 563 is released by the cable 512, i.e. by release of handle 514, the shift handle 563 is pulled by spring 326 causing the disengagement of the clutch by spacing of the friction disks on the one hand and the paying-out of the chain 599 by reverse rotation of the axle 580, enhanced by the coil spring 598. Coil spring 598 insures that in the absence of actuation of the brake handle 514, the chain 599 lies generally along a straight line, indicated by reference numeral 604. This extra safeguard is deemed necessary for cancelling or neutralizing the braking operation in case the conventional spring means of the braking mechanisms are insufficient to overcome the rotation moment amplified by the transmission ratio of the gear 578 and end 576 of axle 534.

The effective amount of friction force available for transferring the kinetic energy from the rotating road wheel 18 to power braking operation is adjusted and controlled by the amount of torque applied to the shift handle 563 about axle 534, which is in turn governed by the amount of force applied to spring 110 by operation of handle 514. The torque applied to to the shift handle 563 governs the overall frictional engagement of disks 554 and 546 and thus the overall transfer coefficient of torque from friction wheel 532 to gear 578.

Gear 578 rotates axle 580, which causes rotation of collar 596 which produces winding of chain 599, thus applying a tension force F to cable 602.

The force F applies rotational torque to the clutch and gear transmission 510 in a clockwise direction in the sense of Fig. 24 about pivot pin 520. This produces a moment of rotation M, which may be expressed as $M = F \times L$, where L is the perpendicular distance between pivot pin 520 and the direction of F.

L is selected, as illustrated in Fig. 24, such that the normal force of engagement between friction wheel 532 and road wheel 18, here termed N, is sufficiently large to transfer from road wheel 18 to friction wheel 532 sufficient force to enable operation of the power braking system as described in Figs. 19 -24. N is given by the following expression and it can be seen that as F increases, N, also increases:

$$N = F \times (L/(B + mc)) \quad (2)$$

where F = the tension force in cable 602

L = the perpendicular distance between pivot pin 520 and traction cable 602 in Fig. 24

B = the perpendicular distance between pivot pin 520 and the axis of the normal force N (Fig. 24)

c = the perpendicular distance between pivot pin 520 and the tangent of N passing through the point of engagement between the friction wheel 532 and the rear wheel 18.

m = the friction coefficient between friction wheel 532 and road wheel 18 ( It is taken to be of positive sign for motion of the road wheel 18 in the forward direction (clockwise in the sense of Fig. 24) and to be of negative sign for motion of the road wheel 18 in the backwards direction).

It is appreciated that the apparatus is operative to provide braking when the vehicle is moving either forward or rearward.

In operation, the amount of force exerted by the rider on brake handle 514 need only be sufficient to provide initial engagement of friction wheel 532 with road wheel 18. When the rider presses on brake handle 514, force is applied via cable 512 on spring 110, thus pulling shift handle 563 and generally causing the frictional engagement of disks 546 and 554. In this way, the rider controls the operation of the power braking system. The force N, which increases automatically with an increase in F, is not limited by the force applied by the rider on the brake handle 512, although it is controlled thereby.

When the brake handle 514 is released, the unit 510 will be allowed to resume its inoperative position wherein the friction wheel 532 becomes disengaged from the rear road wheel 18.

As in the embodiments of Figs. 1 - 4 and 5 - 9, the friction power brake system illustrated in Figs 19 - 24 can be associated with one or both of the vehicle wheel-braking mechanisms.

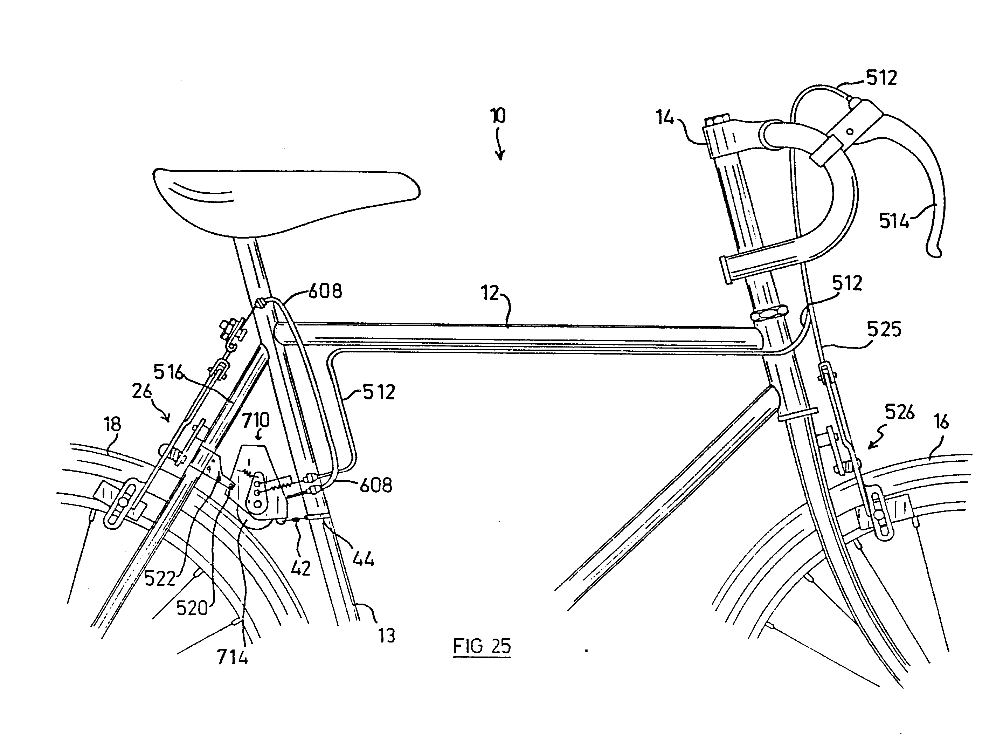

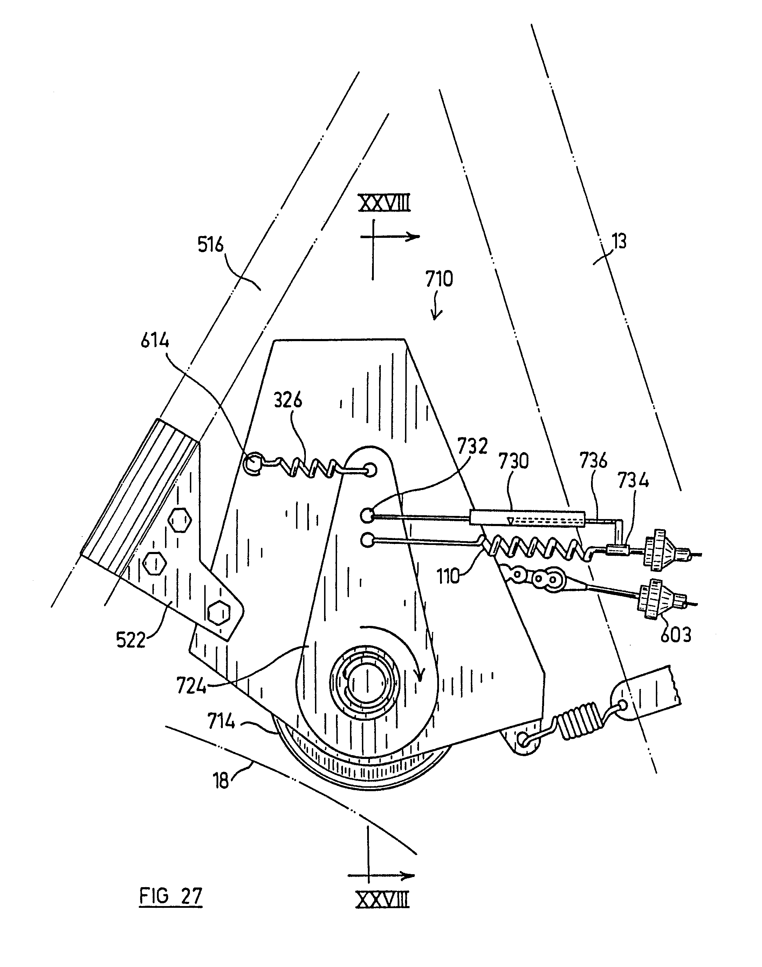

According to an additional alternative embodiment of the present invention, an electrical embodiment of the powered braking system may be provided, as illustrated in Figs. 25 - 30. For the sake of conciseness and clarity, those elements in the embodiment of Figs. 25 - 31 which are identical to corresponding elements described hereinabove in connection with Figs. 1 - 4, 5 - 9 and 19 - 24 are referred to in Figs. 25 - 30 by identical reference numbers and are not described here once again.

According to the present invention there is provided an auxilliary system which comprises an electromechanical unit 710 and a traction cable 512, operatively coupled between the unit 710 and the brake handle 514. The unit 710 is mounted on a pair of frame-members 516 by a pivot pin 520, and a clamp 522 and is attracted in the direction of the frame-member 13 by coil-spring 42, attached to the frame-member 13 by clamp 44.

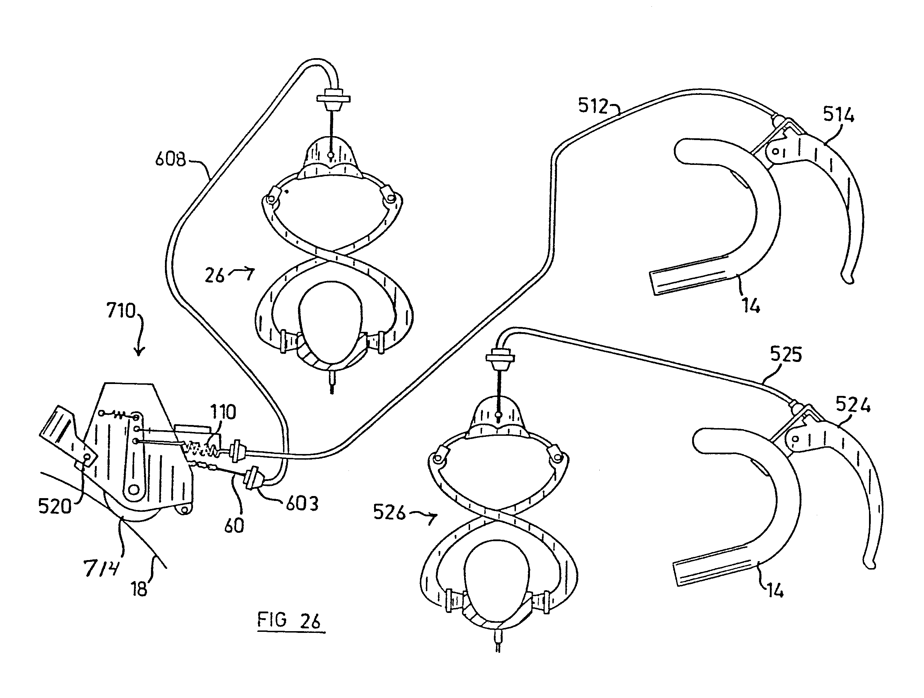

Fig. 26 illustrates a conventional front wheel braking arrangement comprising brake handle 524, cable 525 and front wheel braking mechanism 526.

The construction of the electro-mechanical prime mover, in the form of electromechanical unit 710 will now be described with reference to Figs. 26 - 29.

A friction wheel 714 is formed as an outer part of an electrical generating unit 716, such as a dynamo or alternator, and is rotatably mounted with respect to a fixed axle 718 by suitable bearings on shaft 718. Fixed axle 718 is fixedly located between side walls 720 and 722 of unit 710. As will be described below, the friction-wheel 714 is adapted to become engaged and disengaged with respeact to rear wheel 18 by a tilting movement of the unit 710 as a whole, through application of the brake handle 514. Electrical generating unit 716 may be of conventional construction such as a bicycle light dynamo wherein the internal part is fixed and the outer portion defines the rotor.

A shift handle 724 is arranged to rotate with respect to axle 718 and is typically slidably rotatably mounted onto axle 718 and is retained thereon by a washer 726.

One end of a linear potentiometer 730 is mounted onto shift handle 724 at a mounting aperture 732. The slider bar 736 of the potentiometer 730 is attached via a bracket 734 to cable 602, such that the potentiometer is mounted mechanically parallel to spring 110.

Collar 596 is fixedly attached to a gear motor axle 738. Collar 596 also serves as a spool for winding of a chain 599 thereabout. Chain 599 is fixedly attached at one end thereof to collar 596 by means of a link 600 and at its other end is attached to a free end of a cable 602 via a nipple 603. Cable 602 extends to rear braking mechanism 26.

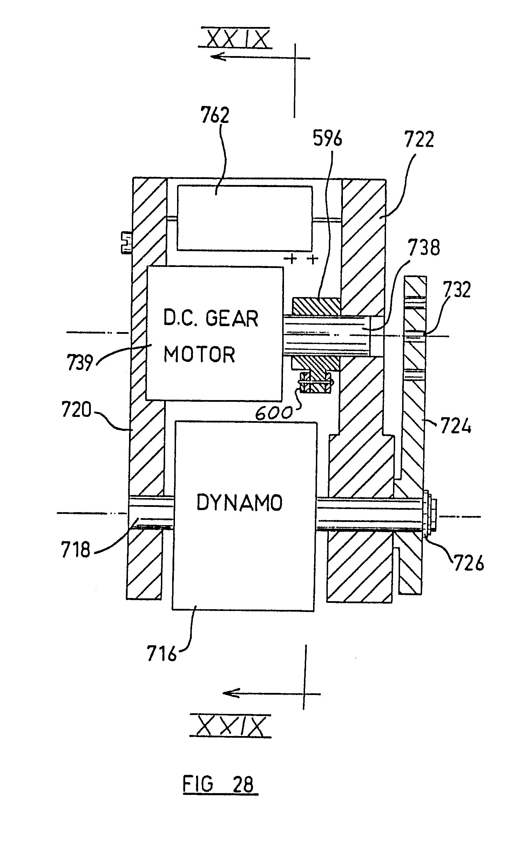

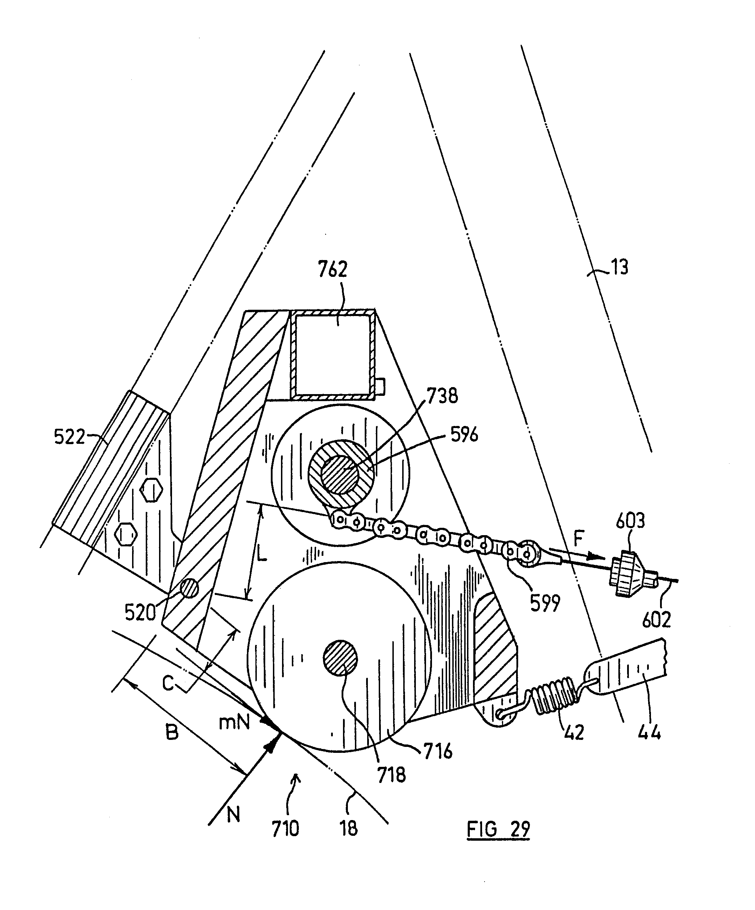

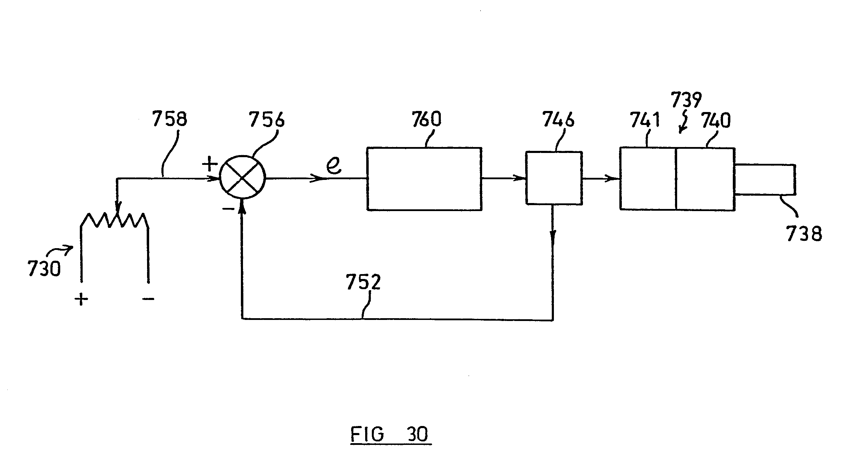

As seen in Fig. 30, a DC gear motor 739 comprises a gear 740 and a DC motor 741. The DC gear motor 739 is fixedly mounted onto side wall 720, as seen in Fig. 28, while gear motor axle 738 is bearing mounted onto side wall 722. Preferably the DC gear motor 739 is restricted to rotation in one direction, the clockwise direction in the sense of Fig. 29.

Current supply to DC motor 741 is measured by a current sensor 746, such as a resistor or any other suitable current sensor, and provides an output signal, indicated by reference numeral 752, which represents the current supply and thus represents to first approximation, the the moment of rotation of the gear motor axle 738, which is proportional to the force F applied to cable 602 by chain 599.

It is seen that potentiometer 730 provides a reference signal to a difference circuit 756 which substracts a feedback signal therefrom. An error signal e is supplied from the difference circuit 756 to an amplifier 760, whose output is supplied to DC gear motor 739. The output signal 752 provides the feedback signal, which is received by the difference circuit 756.

It may be appreciated that a more accurate indication of the moment of rotation of the gear motor axle 738 may be provided by employing a shaft encoder on motor 741.

The various electronic components described above are preferably located in a circuitry housing 762, illustrated in Fig. 28.

When the rider wishes to brake, and applies the handle 514, the following operations occur: First, the cable 512 pulls the shift handle 724, which causes rotation of the unit 710 about pivot pin 520 and brings the friction wheel 714 into contact with the rear road wheel 18. As a result of the sidewise force applied against the upper end of the shift handle 724, against the tension of the spring 326, which is weaker than the spring 110, a progressive movement of the assembly of the shift handle 724 causes the progressive extension of spring 110 and consequent extension of slider 736 relative to the rest of potentiometer 730, thus increasing the reference signal output of the potentiometer.

The effective amount of friction force available for transferring the kinetic energy from the rotating road wheel 18 to power braking operation is adjusted and controlled by the amount of torque applied to the shift handle 724 about axle 726, which is in turn governed by the amount of force applied to spring 110 by operation of handle 514.

When the rider pulls more on the brake handle 514, the potentiometer 730 outputs a larger reference signal and causes the control circuitry (Fig. 31) to provide a larger moment of rotation of the gear motor. This moment rotates the gear motor axle 738, causing rotation of collar 596 which pulls on chain 599 and applies a force F to cable 602, which operates the rear braking mechanism 26. The more that the rider pulls on the brake handle, the more force F is applied to the rear braking mechanism. When the rider lets go of the brake handle, spring 110 is untensioned, returning the potentiometer to its unextended orientation, producing a zero moment of rotation of the gear motor and eliminating the force F on the rear braking mechanism.

The force F applies rotational torque to the electromechanical unit 710 in a clockwise direction in the sense of Fig. 29 about pivot pin 520. This produces a moment of rotation M, which may be expressed as $M = F \times L$, where L is the perpendicular distance between pivot pin 520 and the direction of F.

L is selected, as illustrated in Fig. 29, such that the normal force of engagement between friction wheel 714 and road wheel 18, here termed N, is sufficiently large to transfer from road wheel 18 to friction wheel 714 sufficient force to enable operation of the power braking system as described in Figs. 25 -31. N is given by the following expression and it can be seen that as F increases, N, also increases:

$$N = F \times (L/(B + mc)) \qquad (3)$$

where F = the tension force in cable 602
L = the perpendicular distance between pivot pin 520 and traction cable 602 in Fig. 29
B = the perpendicular distance between pivot pin 520 and the axis of the normal force N (Fig. 29)
c = the perpendicular distance between pivot pin 520 and the tangent to N passing through the point of engagement between friction wheel 714 and the rear wheel 18
m = the friction coefficient between friction wheel 714 and road wheel 18 ( It is taken to be of positive sign for motion of the road wheel 18 in the forward direction (counterclockwise in the sense of Fig. 29) and to be of negative sign for motion of the road wheel 18 in the backwards direction.)

In operation, the amount of force exerted by the rider on brake handle 514 need only be sufficient to provide intial engagement of friction wheel 714 with road wheel 18. When the rider presses on brake handle 514, force is applied via cable 512 on spring 110, thus pulling shift handle 724 and generally increasing the output of the potentiometer 730. In this way, the rider controls the operation of the power braking system. The force N, which increases automatically with an increase in F, is not limited by the force applied by the rider on the brake handle 512, although it is controlled thereby.

According to an alternative embodiment of the invention, the gear motor 742, collar 596 and chain 599 may be replaced by a linear solenoid which is operated directly under the control of the brake handle. Such a solenoid would be operative to selectable pull cable 602 and apply thereto a force F.

When the brake handle 514 is released, the unit 710 will be allowed to resume its inoperative position wherein the friction wheel 714 becomes disengaged from the rear road wheel 18.

As in the embodiments of Figs. 1 - 4, 5 - 9 and 19 - 24 friction power brake system illustrated in Figs 25 - 31 can be associated with one or both of the vehicle wheel-braking mechanisms.

Having thus described the invention with particular reference to the preferred form thereof, it will be obvious to those skilled in the art to which the invention pertains, after understanding the invention, that various changes and modifications may be made therein without departing from the spirit and scope of the invention, as defined by the claims appended hereto.

**Claims**

1. A power braking system for a vehicle comprising:
means for deriving kinetic energy from at least one road wheel of a vehicle or a from a component fixedly coupled thereto for rotation therewith; and
means for selectably applying at least a portion of said derived kinetic energy to braking apparatus.

2. A power braking system according to claim 1 and wherein said means for deriving kinetic energy comprises rotatable means which selectably engages a road wheel of the vehicle.

3. A power braking system according to either of the preceding claims and wherein said means for selectably applying comprises mechanical means for applying force to braking apparatus.

4. A power braking system according to either of the preceding claims 1 and 2 and wherein said means for selectably applying comprises electro-mechanical means for applying force to braking apparatus.

5. A power braking system according to either of the preceding claims 1 and 2 and wherein said means for selectably applying comprises hydraulic means for applying force to braking apparatus.

6. A power braking system according to any of the preceding claims and also comprising operator control means for controlling the operation of at least one of the means for selectably applying and the means for deriving.

7. A power braking system according to claim 6 and wherein said operator control means comprises hand operated lever means.

8. A power braking system according to any of the preceding claims and also comprising means for sensing and preventing overturning of a vehicle due to excessive braking.

9. A power braking system according to any of the preceding claims and wherein said means for deriving comprises a friction engagement wheel and means for selectably bringing the friction engagement wheel into energy deriving frictional engagement with a road wheel.

10. A power braking system according to claim 9 and wherein said means for selectably bringing comprises means for selectably pivoting said friction engagement wheel into energy deriving frictional engagement with a road wheel.

11. A power braking system according to either of claims 9 and 10 and wherein said means for selectably bringing comprises means for increasing the frictional engagement of the friction engagement wheel with the road wheel as a positive function of the energy applied to the braking apparatus by said means for selectably applying.

12. A power braking system according to any of the preceding claims and also comprising road wheel braking apparatus.

13. A power braking system according to claim 3 and wherein said means for selectably applying comprises clutch means, selectably operable by an operator and providing selectable force engagement with said means for deriving and cable tensioning means coupled to said clutch means for tensioning a cable of braking apparatus in response to closing of said clutch means.

14. A power braking system according to claim 13 and wherein said cable tensioning means is provided with spring means for removing tension on the cable when said clutch is opened following tensioning of the cable.

15. A power braking system according to claim 4 and wherein said means for selectably applying comprises electrical generating means driven by said means for deriving and cable tensioning means operated by said electrical generating means for tensioning a cable of braking apparatus.

16. A power braking system according to claim 15 and also comprising operator control means for controlling the operation of said means for deriving and for governing the operation of said cable tensioning means.

17. A power braking system according to claim 16 and wherein said control means comprises a potentiometer which governs the supply of electricity to said cable tensioning means.

18. A power braking system according to either of claims 16 and 17 and wherein said cable tensioning means comprise a electric gear motor.

19. A power braking system according to claim 5 and wherein said means for selectably applying comprises a hydraulic pump operatively driven by said means for deriving, hydraulic valve means selectably operable by an operator and hydraulic operating means for braking apparatus, operable in response to control by said hydraulic valve means.

20. A power braking system according to claim 19 and wherein said hydraulic operating means comprise cable tensioning means.

21. A power braking system according to claim 19 and claim 8 and also comprising means for governing the operation of said means for sensing and limiting whereby limited braking is provided even when the vehicle is not moving.

22. A power braking system according to claim 1 and wherein said means for deriving comprises a friction wheel for driving upon engagement with and rotation by a road-wheel of the vehicle and wherein said means for selectably applying comprises a hydraulic rotational pump driven by said friction wheel, a cylinder and piston device connected to the pump, a valve for controlling the supply of pressurized hydraulic fluid from the pump to the cylinder and piston device, means for coupling the cable to the cylinder and piston device, manually operated means for selectively activating the valve whereby a linear movement produced by the device effects the application of the brake jaws to brake the rotation of the respective road-wheel.

23. A power braking system according to claim 22 and wherein the friction-wheel is rotatably mounted on a housing accommodating the pump, the housing being pivotally mounted on a frame member of the vehicle with the friction-wheel disengaged from the road-wheel, the engaging means comprising means for pivoting the housing into an operative, tilted position whereby the friction wheel engages the road-wheel.

24. A power braking system as claimed in Claim 1 wherein the engaging means comprise a handle-operated traction cable system coupled to the housing for tilting the housing by the application of the handle, and spring means for resuming an inoperative, non-tilted position of the housing when the handle is released.

25. A power braking system according to claim 24 and wherein the handle is operatively coupled to either the brake-jaws or to intermediate means which become operative only in case the said linear movement is non-existent, said intermediate means comprising a link coupled to a traction member of the brake-jaws.

26. A power braking system according to claim 24 and wherein the cable system is coupled to the control valve for adjustably actuating the valve by the handle immediately after and for as long as the housing is maintained in its tilted position.

27. A power braking system according to claim 26 and wherein said pump housing comprises a pressurized fluid by-pass passage for recirculation of the fluid branched off the supply passage, and having an outlet port, the said control valve comprising a displaceable plug member adapted to close and thereby restrict the flow of the fluid through the outlet port by the manually operable means, to achieve control over the amounts of pressure and fluid supply to the cylinder and piston device.

28. A power braking system according to claim 27 and the valve plug is mounted on one free end of a rod partly extending within the housing and partly projecting through and swivably connected to a wall portion of the housing, the other end of the rod being coupled to the cable system.

29. A power braking system according to claim 1 and wherein said means for deriving comprises a friction wheel for driving a first rotationally power-driven member upon engagement with and rotation by a road-wheel of the vehicle and said means for selectably applying comprises a friction clutch device comprising said first member, and a second, rotationally friction-driven member, selectively engageable to the first member for driving the second member by friction between the members, means for adjustably displacing the members with respect of each other, towards and away from their frictionally-engaged position; and traction means coupled to the second member and to the said cable for effecting the application of the brake jaws to brake the rotation of the respective road-wheel.

30. A power braking system according to claim 3 wherein the friction wheel is mounted on an axle provided with a series of first friction disks, a series of second friction disks being provided on a sleeve surrounding the axle, the sleeve being axially slidable relative to the axle to bring the disks of the first and second series into frictional engagement with each other, the axle being further coupled via a gear train to a second axle, the arrangement being such that by engagement of the friction disks, the cable becomes pulled and operates a traction member of the brake jaws.

31. A power braking system according to claim 21 and wherein said means for governing the operation of said means for sensing and limiting whereby limiting braking is provided even when the vehicle is not moving comprises pressurized hydraulic fluid accumulator means.

32. A power braking system according to claim 19 and wherein said hydraulic operating means comprise hydraulically operated brakes.

FIG. 1

FIG. 2

0269547

FIG. 3

FIG. 4

FIG. 5

FIG 6

FIG. 7

FIG. 8

0269547

FIG. 9

0269547

FIG 10

FIG 11

FIG 12

0269547

FIG 13

0269547

FIG 14

0269547

PRESSURE
AT SUPPLY
OUTLET

FIG 15A

SPEED OF
BICYCLE

FIG 15B

ROTATION
OF REAR
WHEEL

FIG 15C

HEIGHT OF
REAR
WHEEL
ABOVE
GROUND

FIG 15D

FIG 16

0269547

FIG 17

FIG 18

0269547

FIG 19

FIG 20

0269547

FIG 21

0269547

FIG 22

FIG 23

0269547

FIG 24

FIG 25

FIG 26

0269547

FIG 27

0269547

FIG 28

0269547

FIG 29

0269547

FIG 30